# EUROPÄISCHE PATENTSCHRIFT

(11) **EP 2 880 117 B1**
(45) Veröffentlichungstag und Bekanntmachung des Hinweises auf die Patenterteilung: **01.03.2017**
(21) Anmeldenummer: 13744534.2
(22) Anmeldetag: 31.07.2013
(51) Int. Cl.: C09K 3/14, B24D 3/14, C04B 35/111

(54) **SCHLEIFKORN, ENTHALTEND EINE ERSTE FLÄCHE OHNE ECKE UND ZWEITE FLÄCHE MIT ECKE**
ABRASIVE GRIT COMPRISING FIRST SURFACE WITHOUT CORNER AND SECOND SURFACE WITH CORNER
GRAIN ABRASIF COMPRENANT UNE PREMIÈRE SURFACE SANS ANGLE ET UNE DEUXIÈME SURFACE AVEC ANGLE

(30) Priorität: 02.08.2012 EP 12178931; 02.08.2012 DE 102012213629; 02.08.2012 EP 12178937; 02.08.2012 DE 102012213632
(43) Veröffentlichungstag der Anmeldung: 10.06.2015
(60) Teilanmeldung: 16199983.4
(73) Patentinhaber: Robert Bosch GmbH, 70442 Stuttgart (DE)
(72) Erfinder: OLDENKOTTE, Moritz, 78464 Konstanz (DE); HEJTMANN, Georg, 74395 Mundelsheim (DE); LINDEMANN, Gert, 72805 Lichtenstein (DE); FUENFSCHILLING, Stefan, 78337 Öhningen (DE); STEDILE, Petra, 73732 Esslingen (DE); JENNI, Adrian, CH-9000 St. Gallen (CH); PLESCHINGER, Tony, Moscow 129515 (RU)
(86) Internationale Anmeldenummer: PCT/EP2013/066105
(87) Internationale Veröffentlichungsnummer: WO 2014/020075

(56) Entgegenhaltungen:
- EP-A1- 0 615 816
- US-A- 5 201 916
- US-A- 5 672 097
- US-A- 5 681 217
- US-A- 5 989 111

## Beschreibung

Die vorliegende Erfindung betrifft Schleifkörner mit definierter Form, Gesamtheiten von Schleifkörnern, Verfahren zum Herstellen von Schleifkörnern, Gießwerkzeuge, Schleifartikel mit Schleifkörnern, Verfahren zum Herstellen von Schleifartikeln sowie Verfahren zum Schleifen einer Oberfläche mit einem Schleifartikel.

Schleifkörner, insbesondere keramische Schleifkörner, mit definierter Form und Größe sind seit einiger Zeit bekannt.

Die US 5,201,916 offenbart unter Anderem flache Schleifkörner mit beispielsweise dreieckiger, rechteckiger oder kreisförmiger Form. Diese Schleifkörner werden aus einer Dispersion hergestellt, die in α-Aluminiumoxid konvertierbare Partikel und eine Flüssigkeit mit einer flüchtigen Komponente enthält. Die Dispersion wird in eine Gießform gegossen, die eine ebene Grundfläche und Vertiefungen aufweist, deren Formen komplementär zur gewünschten Formen der Schleifkörner sind. Anschließend wird ein Teil der flüchtigen Komponente entfernt, so dass ein Vorprodukt mit der gewünschten Form entsteht. Das Vorprodukt wird dann aus der Gießform entnommen, kalziniert und schließlich gesintert, so dass das fertige Schleifkorn entsteht.

Die mit diesem Verfahren hergestellten Schleifkörner weisen zwei gegenüberliegende Grundflächen auf, die im Wesentlichen die gleiche geometrische Form haben. Den Schleifkörnern wird eine längere Lebensdauer zugewiesen, da von den Schleifkörnern während des Schleifens ständig kleine Stücke abbrechen, so dass sich neue Schneideflächen ergeben. Die Schleifkörner schärfen sich hierdurch selbst. Von Schleifkörnern mit einer Grundfläche in Form eines Dreiecks, insbesondere eines gleichseitigen Dreiecks, wird vermutet, dass sich beim elektrostatischen Streuen etwa ein bis zwei Drittel so orientieren, dass eine Spitze von der Unterlagen weg weist, während sich weitere Schleifkörner so orientieren, dass die Spitze auf die Unterlage zu weist.

In einem in EP 615 816 beschriebenen alternativen Verfahren werden mittels Extrusion zunächst längliche, stangenförmige Vorprodukte erzeugt, die anschließend in einzelne Schleifkörner zerteilt werden. Die stangenförmigen Schleifkörner können somit beispielsweise eine Zylinder- oder Prismenform aufweisen.

In der WO 2009/085841 wird ein weiteres Herstellungsverfahren beschrieben, bei dem das Vorprodukt in der Gießform unter Bedingungen getrocknet wird, die zum Brechen des Vorprodukts führen. Die Bruchstücke weisen zumindest teilweise Oberflächen und Kanten auf, die komplementär zu den entsprechenden Oberflächen und Kanten der Gießform sind und daher den durch die Gießform definierten Winkel aufweisen. Diese Oberflächen und Kanten liefern eine erhöhte Schneidfähigkeit. Die weiteren, durch das Brechen entstandenen Oberflächen und Kanten sind hingegen unregelmäßig.

Die WO 2010/077495 offenbart Schleifkörner, die eine durchgehende oder eine nicht durchgehende Öffnung enthalten oder eine schalenartige Form aufweisen. Auch Herstellungsverfahren für derartige Schleifkörner sind dort beschrieben. Weitere Schleifkörner mit undefinierten Öffnungen sind in der WO 2010/077518 offenbart. Die WO 2010/077491 befasst sich ebenfalls mit Schleifkörnern mit einer schalenartigen Form.

Aus der WO 2010/077519 sind Schleifkörner bekannt, die zwei gegenüberliegende Hauptflächen und dazwischen verlaufende, zu den Hauptflächen geneigte Seitenflächen aufweisen. Die verschiedenen Seitenflächen eines Schleifkorns können unter verschiedenen Winkeln relativ zu den Hauptflächen geneigt sein.

Das Dokument WO 2011/068724 zeigt ebenfalls Schleifkörner, welche eine Grundseite und eine Spitze sowie dazwischen verlaufende geneigte Seitenflächen aufweisen. Ähnliche Schleifkornformen sind auch in der WO 2011/109188 beschrieben.

Das Dokument WO 2010/077509 befasst sich mit Schleifkörnern, die eine Oberfläche mit einer Vielzahl von Furchen aufweisen. Diese Furchen werden mit Hilfe von komplementären Graten an der Unterseite der Gießform erzeugt.

Die WO 2011/068714 zeigt pyramidenförmige Schleifkörner mit einer parallelogrammförmigen, insbesondere rhombischen, einer drachenförmigen und einer superelliptischen Grundfläche.

Die WO 2011/139562 offenbart Schleifkörner in Form von Tetraedern und Abwandlungen davon. Beispielsweise können die Seitenflächen konkav oder konvex ausgebildet sein, die Ecken des Tetraeders können abgestumpft sein, oder die Kanten können kurvenförmig sein.

Die in WO 2012/018903 beschriebenen Schleifkörner enthalten zwei oder mehr plattenförmige Abschnitte, welche unter einem Winkel zueinander angeordnet sind.

Bei dem in WO 2012/061016 beschriebenen Verfahren wird zunächst ein abrasives Gebilde hergestellt, welches Schleifkornvorprodukte enthält, die über zerbrechliche Stege miteinander verbunden sind. Nach dem Sintern werden die Schleifkörner voneinander getrennt, indem die Stege durchbrochen werden.

Alternativ können Schleifkörner definierter Form auch mit einem Siebdruckverfahren hergestellt werden. Dies beschreibt beispielsweise die WO 96/12776. Dabei wird eine dimensionsstabile Dispersion durch Öffnungen mit definierter Form auf ein Transportband geleitet und anschließend gehärtet. Die Öffnungen können beispielsweise in einem beweglichen Endlosband enthalten sein.

Eine Weiterentwicklung des Siebdruckverfahrens ist in der WO 2011/087649 offenbart. Bei diesem Verfahren wird die Dispersion mit Hilfe eines Differenzdrucks durch die Öffnungen des Endlosbandes hindurchgedrückt. Bei geeigneter Wahl der Viskosität der Dispersion können mit diesem Verfahren Schleifkörner hergestellt werden, deren Querschnitt sich von einer ersten Hauptseite zu einer zweiten gegenüberliegenden Hauptseite verjüngt.

In der WO 2012/061033 werden Verfahren zum Herstellen von Schleifkörnern definierter Form mit Hilfe von Laserstrahlung beschrieben. Zudem sind weitere spezielle Formen von Schleifkörnern offenbart. Beispielsweise können die Schleifkörner ein Hauptelement und mindestens drei sich davon erstreckende, stangenförmige Elemente enthalten. Insbesondere kann das Schleifkorn die Form eines Kreuzes, eines Großbuchstaben "T", eines Sternes oder eines griechischen Kleinbuchstaben "λ" haben.

Die US 5681217A offenbart ein Schleifkorn, aufweisend eine Oberfläche mit einer ersten Fläche mit einer ersten Außenkontur und einer zweiten Fläche mit einer zweiten Außenkontur. Die erste Außenkontur enthält dabei keine Ecken.

Allgemein wird davon ausgegangen, dass Schleifkörner mit definierter Form in mehrerlei Hinsicht verbesserte Eigenschaften aufweisen: Haben die Schleifkörner bereits zum Beginn ihrer Herstellung eine definierte Form und Größe, so entfällt ein anschließender Sortierschritt, mit dem die Schleifkörner ansonsten in verschiedene Größenfraktionen aufgeteilt werden müssten. Zudem bleiben die Formen und Größen auch zwischen verschiedenen Produktionschargen nahezu unverändert, was die Schleifeigenschaften sehr gut reproduzierbar macht. Des Weiteren können die Schleifkörner beispielsweise einen erhöhten Gesamtabtrag leisten, eine längere Lebensdauer haben, eine gesteigerte Oberflächengüte der bearbeiteten Oberfläche erzeugen oder ein besser reproduzierbares Schleifergebnis liefern.

Dennoch weisen die aus dem Stand der Technik bekannten Schleifkörner eine Reihe von Nachteilen auf. Beispielsweise lassen sich viele der bekannten Schleifkörner nicht sehr platzsparend auf einer Schleifmittel-Unterlage anordnen. Zudem lassen sich viele der bekannten Schleifkörner nicht ausreichend in einem auf einer Schleifmittel-Unterlage aufgetragenen Bindemittel verankern.

Es ist daher eine Aufgabe der vorliegenden Erfindung, die Nachteile des Standes der Technik zumindest teilweise zu beheben. Insbesondere soll also ein Schleifkorn bereitgestellt werden, welches derart ausgebildet ist, dass sich eine Vielzahl solcher Schleifkörner platzsparender auf einer Schleifmittel-Unterlage anordnen lässt. Zudem sollte das Schleifkorn derart ausgebildet sein, dass es möglichst sicher in einem auf einer Schleifmittel-Unterlage aufgetragenen Grundbinder verankert werden kann. In vorteilhaften Ausgestaltungen sollte das Schleifkorn gleichzeitig derart beschaffen sein, dass eine verbesserte Spanbildung und/oder ein erhöhter Materialabtrag erreicht werden können. Zudem sollte das Schleifkorn in bevorzugten Ausführungsformen derart ausgestaltet sein, dass es sich auch mit Hilfe einer mechanischen Streuung mit möglichst hoher Wahrscheinlichkeit in einer vorteilhaften Orientierung auf einer Unterlage anordnen lässt. Eine vorteilhafte Orientierung liegt beispielsweise dann vor, wenn Ecken und/oder Kanten des Schleifkorns von der Unterlage weg weisen und daher auf eine zu bearbeitende Oberfläche hin weisen.

Diese Aufgabe wird gelöst durch ein Schleifkorn, welches eine Oberfläche mit mindestens einer ersten Fläche und mindestens einer zweiten Fläche aufweist. Die erste Fläche weist eine erste Außenkontur auf, welche die erste Fläche begrenzt; die zweite Fläche weist eine zweite Außenkontur auf, welche die zweite Fläche begrenzt. Erfindungsgemäß enthält die erste Außenkontur keine Ecke, während die zweite Außenkontur aber mindestens eine Ecke enthält.

Hier und im Folgenden wird unter einer Fläche ein zusammenhängender zweidimensionaler Teil der Oberfläche des Schleifkorns verstanden, der aus Punkten besteht, an denen jeweils eine wohldefinierte, gedachte Tangentialebene an das Schleifkorn angelegt werden kann. Eine solche Fläche kann eben oder gewölbt sein, insbesondere konkav gewölbt oder konvex gewölbt. Sie kann auch mindestens einen ebenen Abschnitt und mindestens einen gewölbten Abschnitt aufweisen, wobei diese Abschnitte ohne dazwischen liegende Kante ineinander übergehen.

Eine Ecke an der zweiten Außenkontur wird hier und im Folgenden als ein Punkt der zweiten Außenkontur verstanden, an dem die Richtung der Tangenten an der zweiten Außenkontur unstetig verläuft. Die erste Außenkontur enthält erfindungsgemäß keine Ecke. Dies bedeutet also, dass die Richtung der an den Punkten der ersten Außenkontur anlegbaren Tangenten entlang der gesamten ersten Außenkontur stetig verläuft. Die erste Außenkontur kann mindestens einen geradlinigen Abschnitt und/oder mindestens einen gekrümmten Abschnitt enthalten, insbesondere mindestens einen konvex gekrümmten Abschnitt und/oder mindestens einen konkav gekrümmten Abschnitt. An den Punkten, an denen benachbarte Abschnitte einander berühren, soll die Richtung der Tangenten jedoch stetig verlaufen. Beispielsweise kann die erste Fläche kreisförmig oder ellipsenförmig sein.

Die zweite Außenkontur enthält mindestens eine wie oben definierte Ecke. Auch die zweite Außenkontur kann mindestens einen geradlinigen Abschnitt und/oder mindestens einen gekrümmten Abschnitt enthalten, insbesondere mindestens einen konvex gekrümmten Abschnitt und/oder mindestens einen konkav gekrümmten Abschnitt.

Wenn ein derartiges erfindungsgemäßes Schleifkorn mit der ersten Fläche auf einer Schleifmittel-Unterlage aufliegt und insbesondere die erste Fläche in einem dort aufgetragenen Grundbinder eingebettet ist, so ist das Schleifkorn besonders sicher verankert. Es sind dann nämlich dort keine Ecken des Schleifkorns vorhanden, die ansonsten bei der Bearbeitung einer Oberfläche Risse im Grundbinder erzeugen könnten, was zu einem Ausbruch des Schleifkorns führen könnte. Zudem können sich Schleifkörner mit Ecken an der ersten Außenkontur gegenseitig behindern, wenn sie beim Streuen auf einer Schleifmittel-Unterlage benachbart angeordnet werden. Aufgrund der nicht vorhandenen Ecken an der ersten Außenkontur können die Schleifkörner somit in vielen Fällen in einer größeren Dichte auf einer Unterlage platziert werden. Die Ecken der zweiten Außenkontur, die von der ersten Außenkontur und daher auch von der Unterlage und dem Grundbinder beabstandet sind und insbesondere davon weg weisen, können hingegen für eine Schleifwirkung sorgen.

Die erste Fläche ist bevorzugt im Wesentlichen eben. Dies erlaubt eine besonders sichere Fixierung an einer Schleifmittel-Unterlage, wenn das Schleifkorn mit der ersten Fläche auf dieser Unterlage zu liegen kommt.

Alternativ oder zusätzlich kann die zweite Fläche im Wesentlichen eben sein.

Zweckmäßigerweise liegen die erste Fläche und die zweite Fläche einander gegenüber und sind unter einem Winkel zueinander angeordnet, der kleiner als 30°, bevorzugt kleiner als 20°, weiter bevorzugt kleiner als 10° und besonders bevorzugt 0° ist. Insbesondere wenn die erste Fläche und die zweite Fläche eben sind, ist es vorteilhaft, wenn das Schleifkorn vollständig zwischen den beiden Ebenen verläuft, die durch die erste Fläche und die zweite Fläche definiert werden.

Wenn ein wie oben genannter Winkel zwischen der ersten Fläche und der zweiten Fläche gebildet ist, insbesondere ein Winkel von 0°, und das Schleifkorn mit seiner ersten Fläche auf einer Schleifmittel-Unterlage aufliegt, so verläuft auch die zweite Fläche unter dem genannten Winkel zu dieser Unterlage, insbesondere also parallel zu der Unterlage. Hierdurch kann eine wohldefinierte Schleifwirkung erzielt werden.

In geometrisch einfachen Ausführungsformen ist die zweite Fläche durch ein Polygon gebildet. Die Ecken des Polygons bilden dann die Ecken der zweiten Außenkontur. Sowohl diese Ecken als auch die dazwischen verlaufenden Kanten sorgen für eine verbesserte Spanwirkung und erhöhen den Materialabtrag von einer bearbeiteten Oberfläche. Das Polygon kann konvex sein oder alternativ mindestens eine überstumpfe Ecke aufweisen. Es kann beispielsweise ein Dreieck, insbesondere ein gleichschenkliges oder sogar ein gleichseitiges Dreieck, ein Viereck, insbesondere ein Parallelogramm oder sogar ein Rechteck oder sogar ein Quadrat, ein insbesondere reguläres Fünfeck oder ein insbesondere reguläres Sechseck sein. Regelmäßige Polygone sind bevorzugt, da sie eine hohe Symmetrie aufweisen, was zu gleichmäßigen Schleifeigenschaften führt.

In vorteilhaften Ausgestaltungen liegt die senkrechte Projektion der zweiten Fläche auf die erste Fläche vollständig im Inneren der konvexen Hülle der ersten Fläche. Diese konvexe Hülle ist die kleinste konvexe Fläche, die die erste Fläche enthält. Bevorzugt liegt die genannte Projektion sogar im Inneren der ersten Fläche selbst. Hierdurch ist das Schleifkorn besonders stabil gegenüber den beim Schleifen auftretenden Kippkräften, wenn es mit der ersten Fläche auf einer Schleifmittel-Unterlage aufliegt.

Besonders bevorzugt verjüngt sich das Schleifkorn entlang einer sich von der ersten Fläche senkrecht erstreckenden Richtung. Dies bedeutet also, dass die senkrechte Projektion jeder parallel zur ersten Fläche und in einem ersten Abstand von dieser verlaufenden ersten Querschnittsfläche vollständig im Inneren jeder parallel zur ersten Fläche und in einem zweiten, kleineren Abstand von dieser verlaufenden zweiten Querschnittsfläche liegt. Hierdurch kann eine besonders gute Verankerung in einem auf einer Unterlage aufgetragenen Grundbinder erzielt werden, da das Schleifkorn eine Art von "Stand fuß" aufweist. Zudem führt dies dazu, dass das Schleifkorn auch mit Hilfe einer mechanischen Streuung mit hoher Wahrscheinlichkeit mit der ersten Fläche auf der Unterlage zu liegen kommt.

Zwischen der ersten Fläche und der zweiten Fläche kann eine Mantelfläche gebildet sein. Es ist günstig, wenn die Schnittlinien der Mantelfläche mit mindestens einer senkrecht zur ersten Fläche und senkrecht zur zweiten Fläche verlaufenden Schnittebene zumindest teilweise konkav sind. Hierdurch entsteht in vielen Ausführungsbeispielen ebenfalls eine Art von "Stand fuß", der eine verbesserte Verankerung in einem Grundbinder erlaubt. Vorteilhafterweise gilt die genannte Eigenschaft für jede senkrecht zur ersten Fläche und senkrecht zur zweiten Fläche verlaufende Schnittebene. Ebenfalls vorteilhaft ist es, wenn die Schnittlinien vollständig konkav sind. Zudem ist es zweckmäßig, wenn die Schnittlinien strikt konkav sind.

Die Form und die Größe des Schleifkorns können etwa mit Hilfe eines Mikroskops bestimmt werden. Das erfindungsgemäße Schleifkorn kann eine Größe im gesamten Größenbereich aufweisen, der auch für herkömmliche Schleifkörner üblich ist. Üblicherweise führen Schleifkörner mit größeren Größen zu einem höheren Materialabtrag von einer bearbeiteten Oberfläche als kleinere Schleifkörner. Beispielsweise kann das Schleifkorn eine Größe im Bereich von 100 µm bis 2000 µm haben. Diese Größe kann experimentell mit Hilfe eines Mikroskops bestimmt werden. Sie wird verstanden als der Durchmesser eines Hüllkreises der ersten Fläche, also als der kleinste Durchmesser eines Kreises, der die erste Fläche umschließt. Weist das Schleifkorn mehrere erste Flächen ohne Ecke auf, so ist die Größe des Schleifkorns der größte der Durchmesser all dieser Flächen.

Bei der oben beschriebenen Form des Schleifkorns handelt es sich um eine Idealisierung. Die Erfindung umfasst jedoch auch Schleifkörner, welche im Rahmen der Herstellungstoleranzen von dieser idealisierten Form abweichen. Mögliche Abweichungen von der idealisierten Form können eine oder mehrere der folgenden Ursachen haben:
- Hohlräume oder Bläschen aufgrund eingeschlossener Luft und/oder anderer Gase in einer Dispersion, aus der die Schleifkörner hergestellt werden;
- fehlende Ecken und/oder Kanten, welche durch ein nicht komplettes Ausfüllen einer Gießform und/oder während eines Entfernens eines Vorprodukts des Schleifkorns aus einer Gießform entstehen;
- eingefallene Seitenflächen und/oder Kanten, die durch ein Schrumpfen während des Entfernens eines Teiles der flüchtigen Komponenten der Dispersion entstehen; insbesondere eingefallene Flächen, die aus der oberen freien, nicht in Kontakt mit der Gießform stehenden Fläche der Dispersion entstehen;
- Abplatzungen, welche durch einen Trocken- und/oder einen Sinterprozess hervorgerufen werden;
- abgebrochene Ecken und/oder Kanten, welche durch einen Transport und/oder während einer Weiterverarbeitung der Schleifkörner als Schüttgut entstehen.

Die Abweichungen von der Idealisierung müssen nicht zwangsläufig zu nachteiligen Eigenschaften des Schleifkorns führen. Beispielsweise können abgebrochene Ecke und/oder Kanten auch bewirken, dass gegenüber der Idealisierung weitere Schneidkanten entstehen, die die Schleifwirkung sogar positiv beeinflussen können.

Insbesondere umfasst die Erfindung auch Schleifkörner, deren Form nur im Wesentlichen mit der idealisierten Form übereinstimmt. Beispielsweise werden die erste oder die zweite Fläche als im Wesentlichen eben verstanden, wenn sie gewölbt sind und Krümmungsradien aufweisen, die mindestens das Doppelte, bevorzugt mindestens das Fünffache, besonders bevorzugt mindestens das Zehnfache der oben definierten Größe des Schleifkorns betragen. Des Weiteren wird ein Punkt der zweiten Außenkontur als Ecke angesehen, wenn dort eigentlich eine Krümmung vorliegt, deren Krümmung jedoch höchstens 10 %, bevorzugt höchstens 5 %, besonders bevorzugt höchstens 2 % der Größe des Schleifkorns beträgt. Ebenso werden Abschnitte der ersten oder der zweiten Außenkontur als geradlinig angesehen, wenn sie zumindest teilweise oder sogar vollständig kurvenförmig sind und einen Krümmungsradius aufweisen, der mindestens das Doppelte, bevorzugt mindestens das Fünffache, besonders bevorzugt mindestens das Zehnfache der Größe des Schleifkorns beträgt. Insbesondere wird auch eine Außenkontur aus Polygon angesehen, wenn sie aus solchen im Wesentlichen geradlinigen Abschnitten und Ecken zusammengesetzt ist.

Bevorzugt weist das Schleifkorn aber eine wie oben beschriebene idealisierte Form auf.

Das Schleifkorn kann beispielsweise ein keramisches Material, insbesondere ein polykristallines keramisches Material, enthalten oder daraus bestehen. Bevorzugt enthält das Schleifkorn Aluminiumoxid, besonders bevorzugt α-Al₂O₃.

Alternativ oder zusätzlich kann das Schleifkorn auch noch mindestens ein weiteres Metalloxid enthalten, wie etwa Natriumoxid, Magnesiumoxid, Eisenoxid, Siliziumoxid, Kalziumoxid, Zirkonoxid, Yttriumoxid, Zinkoxid, Kobaltoxid, Nickeloxid, Hafniumoxid, Chromoxid, Praseodymoxid, Samariumoxid, Ytterbiumoxid, Neodymoxid, Lanthanoxid, Gadoliniumoxid, Ceroxid, Dysprosiumoxid, Erbiumoxid, Lutetiumoxid, Titanoxid, Manganoxid oder beliebige Kombinationen davon.

Viele dieser Metalloxide stammen von Verunreinigungen in den Ausgangsrohstoffen, wie beispielsweise in Aluminiumoxid. Bei ausreichend geringen Anteilen im Schleifkorn haben solche Verunreinigungen jedoch keinen negativen Einfluss auf die Herstellung und die Anwendung des Schleifkorns. Einige der genannten Verunreinigungen können sogar einen positiven Effekt auf das Schleifkorn haben.

Anteile von Zirkonoxid oder Yttriumoxid können beispielsweise von Mahlkugeln stammen, die in einem Mahlschritt bei der Herstellung der Schleifkörner verwendet werden können. Anteile von Eisenoxid können aus einem Mahlbehälter stammen, der bei einem solchen Mahlschritt verwendet wird.

Ebenfalls alternativ oder zusätzlich kann das Schleifkorn weitere Hartstoffe enthalten, wie beispielsweise Siliziumkarbid.

Weiterhin kann das Schleifkorn mindestens ein Zersetzungsprodukt eines unten näher beschriebenen Dispergators enthalten, der bei der Herstellung der Schleifkörner verwendet wurde. Ferner kann das Schleifkorn mindestens einen Keimbildner oder dessen Zersetzungsprodukt enthalten, welches bei der Herstellung der Schleifkörner verwendet wurde. Bei dem Keimbildner kann es sich beispielsweise um das oben bereits erwähnte Magnesiumoxid handeln.

Zudem kann das Schleifkorn auch mindestens einen der weiteren in der EP 615 816 A1 beschriebenen Stoffe enthalten.

Die genannten Inhaltsstoffe können mit Hilfe von an sich bekannten chemischen Analyseverfahren bestimmt werden.

Das Schleifkorn kann ein Gefüge mit einer oder mehreren verschiedenen Phasen enthalten oder daraus bestehen. Dabei kann eine erste Phase aus Aluminiumoxid, besonders bevorzugt aus α-Al₂O₃ bestehen. Eine zweite Phase kann aus einem oder mehreren der oben genannten weiteren Metalloxide und/oder weiteren Hartstoffe bestehen.

Der Anteil an Aluminiumoxid, insbesondere an α-Al₂O₃, im Schleifkorn kann beispielsweise mindestens 25 Gew.-%, bevorzugt mindestens 50 Gew.-%, weiter bevorzugt mindestens 70 Gew.-%, besonders bevorzugt mindestens 95 Gew.-% betragen.

Das Schleifkorn kann eine Beschichtung aufweisen, welche nur einen Teil der Oberfläche bedeckt, insbesondere nur eine oder mehrere Kanten und/oder nur einen von mehreren flächigen Bereichen der Oberfläche. Bei der Beschichtung kann es sich etwa um eine ferromagnetische oder eine paramagnetische Beschichtung handeln. Eine solche teilweise Beschichtung der Oberfläche mit einem ferromagnetischen oder einem paramagnetischen Material ermöglicht es, das Schleifkorn in einem während des Streuens angelegten Magnetfeld in einer vorgegebenen Richtung auszurichten. Alternativ kann es sich auch um eine Beschichtung aus einem Material mit einer erhöhten Wärmeleitfähigkeit handeln oder um eine Beschichtung, welche eine erhöhte Adhäsion des Schleifkorns auf der Schleifmittel-Unterlage ermöglicht.

Ein weiterer Aspekt der Erfindung betrifft eine Gesamtheit von Schleifkörnern. Unter einer Gesamtheit von Schleifkörnern wird hier und im Folgenden eine zusammengehörige Ansammlung von Schleifkörnern verstanden. Beispielsweise kann es sich dabei um eine Ansammlung von Schleifkörnern handeln, die in einem Gebinde enthalten und so gelagert und/oder transportiert werden, beispielsweise in einem Sack.

Eine solche Ansammlung von Schleifkörner kann zur Herstellung eines Schleifartikels verwendet werden. Als Gesamtheit von Schleifkörnern wird auch die Gesamtheit aller in einem Schleifartikel vorhandenen Schleifkörner angesehen.

Bevorzugt enthält die Gesamtheit von Schleifkörnern mindestens 20 Gew.-%, bevorzugt mindestens 50 Gew.-%, besonders bevorzugt mindestens 90 Gew.-% erfindungsgemäße Schleifkörner, so wie sie oben beschrieben wurden. Die übrigen in der Gesamtheit enthalten Schleifkörner können ebenfalls eine definierte Form aufweisen, welche jedoch von der erfindungsgemäßen Form abweicht, oder sie können keine definierte Form aufweisen, da es sich beispielsweise um gebrochene Schleifkörner handelt. Diese übrigen in der Gesamtheit enthalten Schleifkörner werden auch als "Stützkörner" bezeichnet.

Es ist denkbar und liegt im Rahmen der Erfindung, dass die in der Gesamtheit enthaltenen erfindungsgemäßen Schleifkörner voneinander verschieden ausgebildet sind. So kann die Gesamtheit von Schleifkörnern beispielsweise einen ersten Anteil von Schleifkörnern einer ersten erfindungsgemäßen Ausführungsform enthalten sowie einen zweiten Anteil von Schleifkörnern einer zweiten erfindungsgemäßen Ausführungsform, die von der ersten erfindungsgemäßen Ausführungsform verschieden ist. Insbesondere können sich die Schleifkörner der ersten erfindungsgemäßen Ausführungsform in ihrer Größe und/oder in ihrer Form von den Schleifkörnern der zweiten erfindungsgemäßen Ausführungsform unterscheiden.

Die Gesamtheit von Schleifkörnern kann ausschließlich aus identischen erfindungsgemäßen Schleifkörnern bestehen; insbesondere hat die Gesamtheit dann eine punktförmige Größenverteilung.

Die Gesamtheit von Schleifkörnern kann im Wesentlichen eine Größenverteilung aufweisen, die einem in der Schleifmittelindustrie üblichen Größenstandard entspricht, beispielsweise dem American National Standards Institute (ANSI), den Standards der Federation of European Producers of Abrasives (FEPA) oder dem Japanese Industrial Standard (JIS). Beispielsweise kann die Gesamtheit der Schleifkörner im Wesentlichen eine Körnung P12, P16, P20, P24, P30, P36, P40, P50, P60, P80, P100, P120, P150, P180, P220, P240, P280, P320, P360, P400, P500, P600, P800, P1000, P1200, P1500, P2000, P2500, P3000 oder P5000 gemäß dem FEPA-Standard aufweisen. Dabei bedeutet eine Größenverteilung "im Wesentlichen", dass zumindest 90 Gew.-%, bevorzugt mindestens 95 Gew.-%, weiter bevorzugt mindestens 99 Gew.-% und besonders bevorzugt sämtliche Schleifkörner der Gesamtheit von Schleifkörnern diesen Standard erfüllen.

Wie oben bereits beschrieben wurde, ist es auch denkbar, dass die Gesamtheit mindestens zwei verschiedene Anteile erfindungsgemäßer Schleifkörner und/oder mindestens einen Anteil nicht erfindungsgemäßer Schleifkörner enthält. Jeder dieser Anteile kann für sich eine Größenverteilung aufweisen, die jeweils einem der oben genannten, in der Schleifmittelindustrie üblichen Größenstandards entspricht.

Ein erfindungsgemäßes Schleifkorn oder eine erfindungsgemäße Gesamtheit von Schleifkörnern kann beispielsweise mit dem folgenden, aus US 5,201,916 bekannten Verfahren hergestellt werden:
a. Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b. Einfüllen der Dispersion in mindestens eine Vertiefung einer Gießform;
c. optional Abrakeln einer Oberseite der Gießform, um zumindest einen Teil der Dispersion zu entfernen, der über die Oberseite der Gießform übersteht;
d. Entfernen eines Teiles der flüchtigen Komponenten der Dispersion, so dass mindestens ein Schleifkorn-Vorprodukt entsteht;
e. Entfernen des Schleifkorn-Vorprodukts aus der Gießform;
f. optional Kalzinieren des Schleifkorn-Vorprodukts;
g. Sintern des Schleifkorn-Vorprodukts, um mindestens ein Schleifkorn zu erhalten.

Vor und/oder während der Herstellung der Dispersion im Schritt a) können die Rohstoffe, insbesondere α-Aluminiumoxid-Partikel und/oder Partikel, welche in α-Aluminiumoxid umwandelbar sind, gemahlen werden. Dies kann beispielsweise mit Hilfe einer Kugelmühle erfolgen, insbesondere mit Hilfe einer Planetenkugelmühle.

Die Dispersion kann mindestens einen Dispergator enthalten. Ein solcher Dispergator erleichtert die Bildung der Dispersion und erhöht ihre Stabilität, indem er beispielsweise Schichten um die einzelnen Körner herum bildet, die das Zusammenklumpen verhindern. Bei dem Dispergator kann es sich beispielsweise um ein Polymer handeln. In der Regel zersetzt sich der Dispergator spätestens während des Sinterns im Schritt g).

Zum Herstellen der erfindungsgemäßen Schleifkörner kann ein Gießwerkzeug verwendet werden, wobei das Gießwerkzeug mindestens eine Gießform umfasst, die mindestens eine Vertiefung mit einer jeweiligen Oberfläche aufweist, wobei die Oberfläche komplementär zur Form zumindest eines Teils der Oberfläche des Schleifkorns ist.

Bevorzugt befindet sich eine Vielzahl von Vertiefungen in der Giessform, sodass mit einem Giessvorgang eine Vielzahl von Schleifkörnern gegossen werden kann.

In einer Weiterentwicklung des aus US 5,201,916 bekannten Verfahrens kann die oben genannte Gießform nur ein Teil eines mehrteiligen Gießwerkzeugs sein, welches zusätzlich mindestens ein Formelement, insbesondere eine weitere Gießform oder ein Stempeletement, umfasst, mit welchem ergänzend zu der in der ersten Gießform geformten Oberfläche zumindest ein Teil der restlichen Oberfläche des Schleifkorns formbar ist. Dies ist insbesondere dann sinnvoll, wenn das herzustellende Schleifkorn Hinterschneidungen aufweist.

Beispielsweise können Stempelelemente vorgesehen sein, die in die gefüllten Vertiefungen der ersten Gießform geführt werden. Alternativ ist es auch denkbar, dass im optionalen Schritt c) nicht die gesamte über die Oberseite der Gießform überstehende Dispersion abgerakelt wird, sondern stattdessen eine Schicht geeigneter Dicke über der Oberseite der Gießform stehen gelassen wird. Hierfür sollte die Dispersion im Schritt c) ausreichend formstabil sein. Beispielsweise kann im Schritt b) eine bereits ausreichend formstabile Dispersion eingefüllt werden oder die Dispersion zwischen den Schritten b) und c) in einen ausreichend formstabilen Zustand überführt werden. Die Stempelelemente müssen bei dieser Variante nicht zwingend in die Vertiefung eindringen; stattdessen kann mit Hilfe der Stempelelemente eine Formgebung in dem überstehenden Teil der Dispersion erfolgen.

Bevorzugt schließen die Stempelelemente die Vertiefungen der Gießform nicht vollständig ab, so dass die flüchtige Komponente der Dispersion entweichen kann.

Kompliziertere Formen von Schleifkörnern sind in zusammensetzbaren Gießformen, ähnlich wie im Spritzgussverfahren, formbar. Dazu weist mindestens eine Gießform mindestens eine Einfüllöffnung auf, durch welche die Dispersion in die Vertiefungen gelangen kann.

Die Gießform und/oder das Stempelelement kann beispielsweise Silikon enthalten oder daraus bestehen. Die Vertiefungen können eine offene Deckfläche aufweisen, durch die die Dispersion eingefüllt werden kann. Die Vertiefungen der Gießform weisen jeweils eine Oberfläche auf, deren Form komplementär zur Form zumindest eines Teils der Oberfläche des gewünschten Schleifkorns ist. Bevorzugt weisen die Vertiefungen der Gießform jeweils eine Oberfläche auf, deren Form komplementär zur Form des Teils der Oberfläche des Schleifkorns ist, der nicht die erste Fläche des Schleifkorns bildet oder der nicht die zweite Fläche des Schleifkorns bildet. Die erste Fläche bzw. die zweite Fläche kann dann aus der oberen freien, nicht in Kontakt mit der Gießform stehenden Fläche der Dispersion entstehen. Aufgrund eines möglichen Schrumpfens der Dispersion während des Schritts d) ist es möglich, dass die erste Fläche bzw. die zweite Fläche nicht vollständig eben ist, sondern eine geringfügige Wölbung aufweist.

Das im Schritt d) entstehende Vorprodukt sollte bevorzugt mechanisch stabil genug sein, um in den nachfolgenden Schritten als Schüttgut weiterverarbeitet werden zu können. Das optionale Kalzinieren in Schritt f) ist insbesondere dann vorteilhaft oder sogar erforderlich, wenn die Dispersion mehrere verschiedene Rohstoffe enthält und eine Phasenumwandlung erforderlich ist.

Noch ein Aspekt der Erfindung betrifft einen Schleifartikel, welcher eine wie oben beschriebene Gesamtheit von Schleifkörnern enthält. Insbesondere können also mindestens 20 Gew.-%, bevorzugt mindestens 50 Gew.-%, besonders bevorzugt mindestens 90 Gew.-% aller Schleifkörner des Schleifartikels als erfindungsgemäße Schleifkörner ausgebildet sein, so wie sie oben beschrieben wurden. Die übrigen Schleifkörner können ebenfalls eine definierte Form aufweisen, welche jedoch von der erfindungsgemäßen Form abweicht, oder sie können keine definierte Form aufweisen.

Bei dem Schleifartikel kann es sich beispielsweise um einen beschichteten Schleifartikel (englisch: "coated abrasive"), einen Vliesschleifartikel, um einen gebundenen Schleifartikel (englisch: "bonded abrasive") oder um eine Schleifbürste handeln.

Ein beschichteter Schleifartikel enthält eine insbesondere flexible Unterlage, wie beispielsweise Papier, Vulkanfiber, eine Folie, ein textiles Material, einen Schaumstoff oder mehrschichtige Kombinationen davon. Die Schleifkörner können mit Hilfe eines Grundbinders (englisch: "make coat") an der Unterlage befestigt sein. Der Grundbinder und die Schleifkörner können mit einem Deckbinder (englisch: "size coat") überdeckt sein. Optional kann oberhalb des genannten Deckbinders auch noch ein zweiter Deckbinder vorhanden sein (englisch: "supersize coat").

Als Grundbinder, Deckbinder und zweiter Deckbinder können sämtliche an sich bekannte Bindemittel eingesetzt werden, beispielsweise aus Kunstharz, wie etwa einem Phenolharz, einem Epoxid, einem Harnstoffharz, einem Melaminharz oder einem ungesättigten Polyesterharz. Der Deckbinder und/oder der zweite Deckbinder können zudem weitere übliche Wirkstoffe und/oder Füllstoffe enthalten.

Der Schleifartikel kann in unterschiedlichen Konfektionsformen vorliegen, beispielsweise als Schleifscheibe oder als Schleifband.

Die Erfindung umfasst auch ein Verfahren zum Herstellen eines wie oben beschriebenen erfindungsgemäßen Schleifartikels. Das Verfahren enthält einen Schritt, in dem eine Gesamtheit von Schleifkörnern an und/oder in einem Substrat fixiert wird, insbesondere mittels eines Bindemittels. Bei dem Substrat kann es sich etwa um eine insbesondere flexible Unterlage eines beschichteten Schleifartikels, um ein Vliesmaterial eines Vliesschleifmittels, um eine Matrix eines gebundenen Schleifmittels oder um Borsten einer Schleifbürste handeln. Im Falle eines beschichteten Schleifartikels kann das Auftragen des Grundbinders und/oder der Schleifkörner und/oder des Deckbinders und/oder des zweiten Deckbinders mit einer an sich bekannten Methode erfolgen. Beispielsweise können die Schleifkörner elektrostatisch oder mechanisch (d. h. gravimetrisch) aufgetragen werden. Insbesondere bei den oben beschriebenen vorteilhaften Ausführungsformen wird auch beim mechanischen Streuen ein großer Anteil der Schleifkörner so orientiert, dass die erste Fläche auf einer Unterlage zu liegen kommt. Auf eine aufwändigere elektrostatische Streuung kann also verzichtet werden.

Ferner richtet sich die Erfindung auch auf ein Verfahren zum Schleifen einer Oberfläche mit einem wie oben beschriebenen Schleifartikel. Bei der Oberfläche kann es sich insbesondere um eine lackierte Oberfläche handeln. Im Falle einer lackierten Oberfläche sind Schleifkörner mit Größen von 500 µm oder weniger besonders geeignet.

Eine weitere nicht erfindungsgemäße Aufgabe wird ferner gelöst durch ein Schleifkorn mit einer Oberfläche, die mindestens eine Grundfläche mit einer Außenkontur enthält, die mindestens sieben Ecken aufweist.

Hier und im Folgenden wird unter einer Fläche und insbesondere einer Grundfläche ein zusammenhängender zweidimensionaler Teil der Oberfläche des Schleifkorns verstanden, der aus Punkten besteht, an denen jeweils eine wohldefinierte, gedachte Tangentialebene an das Schleifkorn angelegt werden kann. Eine solche Fläche kann eben oder gewölbt sein, insbesondere konkav gewölbt oder konvex gewölbt. Sie kann auch mindestens einen ebenen Abschnitt und mindestens einen gewölbten Abschnitt aufweisen, wobei diese Abschnitte ohne dazwischen liegende Kante ineinander übergehen.

Die Außenkontur der Grundfläche kann mindestens einen geradlinigen Abschnitt und/oder mindestens einen gekrümmten Abschnitt enthalten, insbesondere mindestens einen konvex gekrümmten Abschnitt und/oder mindestens einen konkav gekrümmten Abschnitt.

Zweckmäßig hat die Grundfläche eine Außenkontur mit mindestens sieben Ecken. In sehr vielen Ausführungsbeispielen weist das Schleifkorn dann auch eine Vielzahl von Kanten auf, wodurch eine hohe Schleifwirkung erzielt werden kann. So enthält beispielsweise die Außenkontur der Grundfläche mindestens sieben Kanten, welche die mindestens sieben Ecken miteinander verbinden. Zusätzlich kann das Schleifkorn für jede der Ecken der Außenkontur der Grundfläche mindestens eine weitere Kante enthalten, die diese Ecke mit einem Punkt außerhalb der Grundfläche verbindet.

Die Anzahl der Ecken der Grundfläche ist mindestens sieben oder kann mindestens acht, mindestens neun, mindestens zehn, mindestens elf, mindestens zwölf, mindestens 13, mindestens 14, mindestens 15, mindestens 16, mindestens 17, mindestens 18, mindestens 19 oder mindestens 20 sein. Sie kann genau sieben, genau acht, genau neun, genau zehn, genau elf, genau zwölf, genau 13, genau 14, genau 15, genau 16, genau 17, genau 18, genau 19 oder genau 20 sein.

Mit besonderem Vorteil ist die Grundfläche im Wesentlichen eben. Dann kann das Schleifkorn nämlich besonderes sicher an einer ebenen Schleifmittel-Unterlage fixiert werden, wenn es mit der Grundfläche auf dieser Unterlage zu liegen kommt.

In einigen geometrisch einfachen Ausgestaltungen kann das Schleifkorn als Kegel mit einer Grundfläche ausgebildet sein, deren Außenkontur mindestens sieben Ecken oder eine wie oben angegebene höhere Anzahl von Ecken aufweist. Ein Kegel wird hierbei allgemein als ein geometrischer Körper verstanden, der von einer im Wesentlichen ebenen Grundfläche und einer Vielzahl von im Wesentlichen geraden Mantelstrecken begrenzt wird, wobei jeder Punkt der Außenkontur der Grundfläche durch jeweils eine der Mantelstrecken mit einem gemeinsamen Punkt des Kegels (der Kegelspitze) verbunden ist, wobei die Kegelspitze außerhalb der durch die Grundfläche definierten Ebene liegt. Insbesondere kann es sich bei dem Kegel um eine Pyramide handeln, bei der die Grundfläche von einem Polygon mit mindestens sieben Ecken gebildet wird. Von jeder Ecke der Grundfläche einer solchen Pyramide erstreckt sich eine Kante des Schleifkorns zur Pyramidenspitze und kann für eine Schneidwirkung sorgen. Alternativ dazu ist es aber auch denkbar, dass die Grundfläche des Kegels mindestens einen gekrümmten Abschnitt oder sogar ausschließlich gekrümmte Abschnitte aufweist, sofern nur die Anzahl der Ecken, die zwischen diesen gekrümmten Abschnitten angeordnet sind, mindestens sieben ist.

In anderen geometrisch einfachen Ausgestaltungen kann das Schleifkorn als Kegelstumpf mit einer Grundfläche ausgebildet sein, deren Außenkontur mindestens sieben Ecken oder eine wie oben angegebene höhere Anzahl von Ecken aufweist. Analog zur obigen allgemeinen Definition wird ein Kegelstumpf als Teil eines Kegels verstanden, bei dem die Kegelspitze durch einen im Wesentlichen ebenen Schnitt abgetrennt wurde. Die durch diesen Schnitt entstehende Deckfläche hat ebenfalls mindestens sieben Ecken. Insbesondere kann der Kegelstumpf ein Pyramidenstumpf mit einer Grundfläche sein, die von einem Polygon mit mindestens sieben Ecken gebildet ist. Von jeder Ecke der Grundfläche eines solchen Pyramidenstumpfs erstreckt sich eine Kante des Schleifkorns zu einer entsprechenden Ecke der Deckfläche und kann für eine Schneidwirkung sorgen. Zudem enthält die Deckfläche des Pyramidenstumpfs die gleiche Anzahl von Kanten wie die Grundfläche, was zu einer weiteren Erhöhung der Schneidwirkung führt.

In weiteren geometrisch einfachen Ausgestaltungen kann das Schleifkorn als Zylinder mit einer Grundfläche ausgebildet sein, deren Außenkontur mindestens sieben Ecken oder eine wie oben genannte höhere Anzahl von Ecken aufweist. Unter einem Zylinder wird hier und im Folgenden allgemein ein Körper verstanden, der von einer Grundfläche und einer Deckfläche sowie von einer Mantelfläche begrenzt wird. Die Grundfläche und die Deckfläche sind dabei bevorzugt im Wesentlichen eben und ebenfalls bevorzugt im Wesentlichen zueinander parallel. Die Mantelfläche wird durch eine Schar von zueinander im Wesentlichen zueinander parallelen Strecken gebildet. Wenn diese Strecken im Wesentlichen senkrecht zur Grundfläche und zur Deckfläche verlaufen, so ergibt sich ein gerader Zylinder. Schiefe Zylinder sind jedoch ebenso denkbar. Die Grundfläche des Zylinders kann beispielsweise ein Polygon mit mindestens sieben Ecken sein; in diesem Fall ist das Schleifkorn also als Prisma ausgebildet.

Es ist ebenfalls denkbar, dass das Schleifkorn als Antiprisma mit einer Grundfläche ausgebildet ist, deren Außenkontur mindestens sieben Ecken oder eine wie oben genannte höhere Anzahl von Ecken aufweist. Ein Antiprisma wird begrenzt durch genau zwei kongruente n-Ecke und 2n insbesondere gleichseitige Dreiecke. An einer Ecke treffen stets ein n-Eck und drei Dreiecke zusammen. Die Gesamtanzahl der Kanten des Antiprismas ist 4n, nämlich n Kanten an der Grundfläche, n Kanten an der gegenüberliegenden Deckfläche sowie 2n Kanten, die zwischen der Grundfläche und der Deckfläche verlaufen. Für diese Ausführungsformen ist n mindestens 7, so dass die Gesamtanzahl der Kanten mindestens 28 ist.

Das Schleifkorn kann auch die Form eines verdrillten Kegels, insbesondere einer verdrillten Pyramide, eines verdrillten Kegelstumpfs, insbesondere eines verdrillten Pyramidenstumpfs, eines verdrillten Zylinders oder eines verdrillten Antiprismas aufweisen. Dies bedeutet, dass die Schnittflächen des verdrillten Körpers parallel zur Grundfläche gegenüber dem nicht verdrillten Körper um einen Winkel verdreht sind, wobei dieser Winkel vom Abstand der Schnittfläche von der Grundfläche abhängt. So kann etwa dieser Winkel linear vom Abstand der Schnittfläche von der Grundfläche abhängen. Beispielsweise hat ein verdrillter Zylinder mit einer Grundfläche in Form eines regelmäßigen Siebenecks in etwa die Form eines Bolzens mit siebengängigem Gewinde.

Wenn die Grundfläche des Schleifkorns im Wesentlichen eben ist, kann dem Schleifkorn eine Höhe zugewiesen werden, die dann als der größte senkrechte Abstand eines Punktes des Schleifkorns von der Grundfläche verstanden wird. Der Grundfläche kann auch ein Flächendurchmesser zugewiesen werden. Dies ist der kleinste Durchmesser eines Kreises, welcher die Grundfläche enthält; er kann somit als Durchmesser eines Hüllkreises der Grundfläche aufgefasst werden. Bevorzugt liegt das Verhältnis zwischen der Höhe und dem Flächendurchmesser im Bereich von 0,8 bis 1,4, weiter bevorzugt von 0,9 bis 1,2, besonders bevorzugt von 0,95 bis 1,05. Für eine mechanische Streuung ist es vorteilhaft, wenn das genannte Verhältnis im unteren Teilbereich dieses Bereichs liegt, da sich das Schleifkorn bei einer mechanischen Streuung dann bevorzugt mit seiner Grundfläche auf einer Schleifmittel-Unterlage orientiert. Im Sinne eines vorteilhaften Spanverhaltens sind eher größere Verhältnisse innerhalb des genannten Bereichs zweckmäßig, da der Winkel zwischen Schleifkorn und einer bearbeiteten Oberfläche näher bei 90° liegt.

In vielen geometrisch einfachen Ausführungsformen ist die Grundfläche ein Polygon mit mindestens sieben Ecken oder einer wie oben genannten höheren Anzahl von Ecken. Dies ist beispielsweise in den oben beschriebenen Ausführungsbeispielen einer Pyramide und eines Pyramidenstumpfs der Fall. Eine Ausführungsform erfasst jedoch noch weitere Geometrien mit polygonaler Grundfläche, die weder Pyramiden noch Pyramidenstümpfe noch Zylinder sind. Das Polygon kann konvex sein; dies bedeutet, dass der Innenwinkel an jeder Ecke kleiner als 180° ist. Es ist jedoch auch denkbar, dass das Polygon an mindestens einer Ecke einen Innenwinkel aufweist, der grösser als 180° ist, so dass das Polygon nicht konvex ist. Beispielsweise kann das Polygon die Form eines Sterns haben. In einigen Ausführungsformen ist das Polygon regelmäßig; dies bedeutet, dass alle Kanten des Polygons gleich lang sind und außerdem die Innenwinkel an allen Ecken gleich groß sind.

Die Form und die Größe des Schleifkorns können etwa mit Hilfe eines Mikroskops bestimmt werden. Das Schleifkorn kann eine Größe im gesamten Größenbereich aufweisen, der auch für herkömmliche Schleifkörner üblich ist. Üblicherweise führen Schleifkörner mit größeren Größen zu einem höheren Materialabtrag von einer bearbeiteten Oberfläche als kleinere Schleifkörner. Beispielsweise kann das Schleifkorn eine Größe im Bereich von 100 µm bis 2000 µm haben. Diese Größe kann experimentell mit Hilfe eines Mikroskops bestimmt werden. Sie wird verstanden als der oben beschriebene Flächendurchmesser der Grundfläche, deren Außenkontur mindestens sieben Ecken aufweist. Enthält das Schleifkorn mehr als eine Grundfläche, deren Außenkontur mindestens sieben Ecken aufweist, so wird die Größe des Schleifkorns als der größte Flächendurchmesser all dieser Grundflächen verstanden.

Bei der oben beschriebenen Form des Schleifkorns handelt es sich um eine Idealisierung. Eine Ausführungdform umfasst jedoch auch Schleifkörner, welche im Rahmen der Herstellungstoleranzen von dieser idealisierten Form abweichen. Mögliche Abweichungen von der idealisierten Form können eine oder mehrere der folgenden Ursachen haben:
- Hohlräume oder Bläschen aufgrund eingeschlossener Luft und/oder anderer Gase in einer Dispersion, aus der die Schleifkörner hergestellt werden;
- fehlende Ecken und/oder Kanten, welche durch ein nicht komplettes Ausfüllen einer Gießform und/oder während eines Entfernens eines Vorprodukts des Schleifkorns aus einer Gießform entstehen;
- eingefallene Seitenflächen und/oder Kanten, die durch ein Schrumpfen während des Entfernens eines Teiles der flüchtigen Komponenten der Dispersion entstehen; insbesondere eingefallene Flächen, die aus der oberen freien, nicht in Kontakt mit der Gießform stehenden Fläche der Dispersion entstehen;
- Abplatzungen, welche durch einen Trocken- und/oder einen Sinterprozess hervorgerufen werden;
- abgebrochene Ecken und/oder Kanten, welche durch einen Transport und/oder während einer Weiterverarbeitung der Schleifkörner als Schüttgut entstehen.

Die Abweichungen von der Idealisierung müssen nicht zwangsläufig zu nachteiligen Eigenschaften des Schleifkorns führen. Beispielsweise können abgebrochene Ecke und/oder Kanten auch bewirken, dass gegenüber der Idealisierung weitere Schneidkanten entstehen, die die Schleifwirkung sogar positiv beeinflussen können.

Insbesondere umfasst eine weitere Ausführungsform auch Schleifkörner, deren Form nur im Wesentlichen mit der idealisierten Form übereinstimmt. Beispielsweise wird ein Teil der Oberfläche des Schleifkorns auch dann als eine (einzige) Fläche angesehen, wenn dieser Teil eigentlich zwei oder mehr jeweils zusammenhängende Flächenteile enthält, die einander an einer Kante berühren, an der ein Innenwinkel eingeschlossen wird, der im Bereich von 160° bis 200°, bevorzugt von 170° bis 190°, besonders bevorzugt von 175° bis 185° liegt. Des Weiteren wird ein Punkt der Oberfläche als Ecke angesehen, wenn dort eigentlich eine Krümmung vorliegt, deren Krümmungsradien jedoch höchstens 10 %, bevorzugt höchstens 5 %, besonders bevorzugt höchstens 2 % der oben definierten Größe des Schleifkorns betragen. Weiterhin wird die Grundfläche auch dann als im Wesentlichen eben verstanden, wenn sie gewölbt ist und Krümmungsradien aufweist, die mindestens das Doppelte, bevorzugt mindestens das Fünffache, besonders bevorzugt mindestens das Zehnfache der oben definierten Größe des Schleifkorns betragen. Zudem wird die Form des Schleifkorns auch dann als Zylinder, Kegel oder Kegelstumpf angesehen, wenn die Mantellinien zumindest teilweise oder sogar vollständig kurvenförmig sind und einen Krümmungsradius aufweisen, der mindestens das Doppelte, bevorzugt mindestens das Fünffache, besonders bevorzugt mindestens das Zehnfache der Größe des Schleifkorns beträgt.

Bevorzugt weist das Schleifkorn aber eine wie oben beschriebene idealisierte Form auf.

Das Schleifkorn kann beispielsweise ein keramisches Material, insbesondere ein polykristallines keramisches Material, enthalten oder daraus bestehen. Bevorzugt enthält das Schleifkorn Aluminiumoxid, besonders bevorzugt α-Al₂O₃.

Alternativ oder zusätzlich kann das Schleifkorn auch noch mindestens ein weiteres Metalloxid enthalten, wie etwa Natriumoxid, Magnesiumoxid, Eisenoxid, Siliziumoxid, Kalziumoxid, Zirkonoxid, Yttriumoxid, Zinkoxid, Kobaltoxid, Nickeloxid, Hafniumoxid, Chromoxid, Praseodymoxid, Samariumoxid, Ytterbiumoxid, Neodymoxid, Lanthanoxid, Gadoliniumoxid, Ceroxid, Dysprosiumoxid, Erbiumoxid, Lutetiumoxid, Titanoxid, Manganoxid oder beliebige Kombinationen davon.

Viele dieser Metalloxide stammen von Verunreinigungen in den Ausgangsrohstoffen, wie beispielsweise in Aluminiumoxid. Bei ausreichend geringen Anteilen im Schleifkorn haben solche Verunreinigungen jedoch keinen negativen Einfluss auf die Herstellung und die Anwendung des Schleifkorns. Einige der genannten Verunreinigungen können sogar einen positiven Effekt auf das Schleifkorn haben.

Anteile von Zirkonoxid oder Yttriumoxid können beispielsweise von Mahlkugeln stammen, die in einem Mahlschritt bei der Herstellung der Schleifkörner verwendet werden können. Anteile von Eisenoxid können aus einem Mahlbehälter stammen, der bei einem solchen Mahlschritt verwendet wird.

Ebenfalls alternativ oder zusätzlich kann das Schleifkorn weitere Hartstoffe enthalten, wie beispielsweise Siliziumkarbid.

Weiterhin kann das Schleifkorn mindestens ein Zersetzungsprodukt eines unten näher beschriebenen Dispergators enthalten, der bei der Herstellung der Schleifkörner verwendet wurde. Ferner kann das Schleifkorn mindestens einen Keimbildner oder dessen Zersetzungsprodukt enthalten, welches bei der Herstellung der Schleifkörner verwendet wurde. Bei dem Keimbildner kann es sich beispielsweise um das oben bereits erwähnte Magnesiumoxid handeln.

Zudem kann das Schleifkorn auch mindestens einen der weiteren in der EP 615 816 A1 beschriebenen Stoffe enthalten.

Die genannten Inhaltsstoffe können mit Hilfe von an sich bekannten chemischen Analyseverfahren bestimmt werden.

Das Schleifkorn kann ein Gefüge mit einer oder mehreren verschiedenen Phasen enthalten oder daraus bestehen. Dabei kann eine erste Phase aus Aluminiumoxid, besonders bevorzugt aus α-Al₂O₃ bestehen. Eine zweite Phase kann aus einem oder mehreren der oben genannten weiteren Metalloxide und/oder weiteren Hartstoffe bestehen.

Der Anteil an Aluminiumoxid, insbesondere an α-Al₂O₃, im Schleifkorn kann beispielsweise mindestens 25 Gew.-%, bevorzugt mindestens 50 Gew.-%, weiter bevorzugt mindestens 70 Gew.-%, besonders bevorzugt mindestens 95 Gew.-% betragen.

Das Schleifkorn kann eine Beschichtung aufweisen, welche nur einen Teil der Oberfläche bedeckt, insbesondere nur eine oder mehrere Kanten und/oder nur einen von mehreren flächigen Bereichen der Oberfläche. Bei der Beschichtung kann es sich etwa um eine ferromagnetische oder eine paramagnetische Beschichtung handeln. Eine solche teilweise Beschichtung der Oberfläche mit einem ferromagnetischen oder einem paramagnetischen Material ermöglicht es, das Schleifkorn in einem während des Streuens angelegten Magnetfeld in einer vorgegebenen Richtung auszurichten. Alternativ kann es sich auch um eine Beschichtung aus einem Material mit einer erhöhten Wärmeleitfähigkeit handeln oder um eine Beschichtung, welche eine erhöhte Adhäsion des Schleifkorns auf der Schleifmittel-Unterlage ermöglicht.

Ein weiterer Aspekt betrifft eine Gesamtheit von Schleifkörnern. Unter einer Gesamtheit von Schleifkörnern wird hier und im Folgenden eine zusammengehörige Ansammlung von Schleifkörnern verstanden. Beispielsweise kann es sich dabei um eine Ansammlung von Schleifkörnern handeln, die in einem Gebinde enthalten und so gelagert und/oder transportiert werden, beispielsweise in einem Sack.

Eine solche Ansammlung von Schleifkörner kann zur Herstellung eines Schleifartikels verwendet werden. Als Gesamtheit von Schleifkörnern wird auch die Gesamtheit aller in einem Schleifartikel vorhandenen Schleifkörner angesehen.

Bevorzugt enthält die Gesamtheit von Schleifkörnern mindestens 20 Gew.-%, bevorzugt mindestens 50 Gew.-%, besonders bevorzugt mindestens 90 Gew.-% Schleifkörner, so wie sie oben beschrieben wurden. Die übrigen in der Gesamtheit enthalten Schleifkörner können ebenfalls eine definierte Form aufweisen, welche jedoch von der Form abweicht, oder sie können keine definierte Form aufweisen, da es sich beispielsweise um gebrochene Schleifkörner handelt. Diese übrigen in der Gesamtheit enthalten Schleifkörner werden auch als "Stützkörner" bezeichnet.

Es ist denkbar, dass die in der Gesamtheit enthaltenen Schleifkörner voneinander verschieden ausgebildet sind. So kann die Gesamtheit von Schleifkörnern beispielsweise einen ersten Anteil von Schleifkörnern einer ersten Ausführungsform enthalten sowie einen zweiten Anteil von Schleifkörnern einer zweiten Ausführungsform, die von der ersten Ausführungsform verschieden ist. Insbesondere können sich die Schleifkörner der ersten Ausführungsform in ihrer Größe und/oder in ihrer Form von den Schleifkörnern der zweiten Ausführungsform unterscheiden.

Die Gesamtheit von Schleifkörnern kann ausschließlich aus identischen Schleifkörnern bestehen; insbesondere hat die Gesamtheit dann eine punktförmige Größenverteilung.

Die Gesamtheit von Schleifkörnern kann im Wesentlichen eine Größenverteilung aufweisen, die einem in der Schleifmittelindustrie üblichen Größenstandard entspricht, beispielsweise dem American National Standards Institute (ANSI), den Standards der Federation of European Producers of Abrasives (FEPA) oder dem Japanese Industrial Standard (JIS). Beispielsweise kann die Gesamtheit der Schleifkörner im Wesentlichen eine Körnung P12, P16, P20, P24, P30, P36, P40, P50, P60, P80, P100, P120, P150, P180, P220, P240, P280, P320, P360, P400, P500, P600, P800, P1000, P1200, P1500, P2000, P2500, P3000 oder P5000 gemäß dem FEPA-Standard aufweisen. Dabei bedeutet eine Größenverteilung "im Wesentlichen", dass zumindest 90 Gew.-%, bevorzugt mindestens 95 Gew.-%, weiter bevorzugt mindestens 99 Gew.-% und besonders bevorzugt sämtliche Schleifkörner der Gesamtheit von Schleifkörnern diesen Standard erfüllen.

Wie oben bereits beschrieben wurde, ist es auch denkbar, dass die Gesamtheit mindestens zwei verschiedene Anteile erfindungsgemäßer Schleifkörner und/oder mindestens einen Anteil nicht erfindungsgemäßer Schleifkörner enthält. Jeder dieser Anteile kann für sich eine Größenverteilung aufweisen, die jeweils einem der oben genannten, in der Schleifmittelindustrie üblichen Größenstandards entspricht.

Ein Schleifkorn oder eine Gesamtheit von Schleifkörnern kann beispielsweise mit dem folgenden, aus US 5,201,916 bekannten Verfahren hergestellt werden:
a. Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b. Einfüllen der Dispersion in mindestens eine Vertiefung einer Gießform;
c. optional Abrakeln einer Oberseite der Gießform, um zumindest einen Teil der Dispersion zu entfernen, der über die Oberseite der Gießform übersteht;
d. Entfernen eines Teiles der flüchtigen Komponenten der Dispersion, so dass mindestens ein Schleifkorn-Vorprodukt entsteht;
e. Entfernen des Schleifkorn-Vorprodukts aus der Gießform;
f. optional Kalzinieren des Schleifkorn-Vorprodukts;
g. Sintern des Schleifkorn-Vorprodukts, um mindestens ein Schleifkorn zu erhalten.

Vor und/oder während der Herstellung der Dispersion im Schritt a) können die Rohstoffe, insbesondere α-Aluminiumoxid-Partikel und/oder Partikel, welche in α-Aluminiumoxid umwandelbar sind, gemahlen werden. Dies kann beispielsweise mit Hilfe einer Kugelmühle erfolgen, insbesondere mit Hilfe einer Planetenkugelmühle.

Die Dispersion kann mindestens einen Dispergator enthalten. Ein solcher Dispergator erleichtert die Bildung der Dispersion und erhöht ihre Stabilität, indem er beispielsweise Schichten um die einzelnen Körner herum bildet, die das Zusammenklumpen verhindern. Bei dem Dispergator kann es sich beispielsweise um ein Polymer handeln. In der Regel zersetzt sich der Dispergator spätestens während des Sinterns im Schritt g).

Zum Herstellen der Schleifkörner kann ein Gießwerkzeug verwendet werden, wobei das Gießwerkzeug mindestens eine Gießform umfasst, die mindestens eine Vertiefung mit einer jeweiligen Oberfläche aufweist, wobei die Oberfläche komplementär zur Form zumindest eines Teils der Oberfläche des Schleifkorns ist.

Die Gießform kann beispielsweise Silikon enthalten oder daraus bestehen. Die Vertiefungen können eine offene Deckfläche aufweisen, durch die die Dispersion eingefüllt werden kann. Die Vertiefungen der Gießform weisen jeweils eine Oberfläche auf, deren Form komplementär zur Form zumindest eines Teils der Oberfläche des gewünschten Schleifkorns ist. Bevorzugt weisen die Vertiefungen der Gießform jeweils eine Oberfläche auf, deren Form komplementär zur Form des Teils der Oberfläche des Schleifkorns ist, der nicht die Grundfläche des Schleifkorns bildet.

Das im Schritt d) entstehende Vorprodukt sollte bevorzugt mechanisch stabil genug sein, um in den nachfolgenden Schritten als Schüttgut weiterverarbeitet werden zu können. Das optionale Kalzinieren in Schritt f) ist insbesondere dann vorteilhaft oder sogar erforderlich, wenn die Dispersion mehrere verschiedene Rohstoffe enthält und eine Phasenumwandlung erforderlich ist.

In einer Weiterentwicklung des aus US 5,201,916 bekannten Verfahrens kann für einige Schleifkörner die oben genannte Gießform vorteilhafterweise nur ein Teil eines mehrteiligen Gießwerkzeugs sein, welches zusätzlich mindestens ein Formelement, insbesondere eine weitere Gießform oder ein Stempelelement, umfasst, mit welchem ergänzend zu der in der ersten Gießform geformten Oberfläche zumindest ein Teil der restlichen Oberfläche des Schleifkorns formbar ist.

Bevorzugt schließen die Stempelelemente die Vertiefungen der Gießform nicht vollständig ab, so dass die flüchtige Komponente der Dispersion entweichen kann.

Kompliziertere Formen von Schleifkornkörpern sind in zusammensetzbaren Gießformen, ähnlich wie im Spritzgussverfahren, formbar. Dazu weist mindestens eine Gießform mindestens eine Einfüllöffnung auf, durch welche die Dispersion in die Vertiefungen gelangen kann.

Noch ein Aspekt betrifft einen Schleifartikel, welcher eine wie oben beschriebene Gesamtheit von Schleifkörnern enthält. Insbesondere können also mindestens 20 Gew.-%, bevorzugt mindestens 50 Gew.-%, besonders bevorzugt mindestens 90 Gew.-% aller Schleifkörner des Schleifartikels als Schleifkörner ausgebildet sein, so wie sie oben beschrieben wurden. Die übrigen Schleifkörner können ebenfalls eine definierte Form aufweisen, welche jedoch von der Form abweicht, oder sie können keine definierte Form aufweisen.

Bei dem Schleifartikel kann es sich beispielsweise um einen beschichteten Schleifartikel (englisch: "coated abrasive"), einen Vliesschleifartikel, um einen gebundenen Schleifartikel (englisch: "bonded abrasive") oder um eine Schleifbürste handeln.

Ein beschichteter Schleifartikel enthält eine insbesondere flexible Unterlage, wie beispielsweise Papier, Vulkanfiber, eine Folie, ein textiles Material, einen Schaumstoff oder mehrschichtige Kombinationen davon. Die Schleifkörner können mit Hilfe eines Grundbinders (englisch: "make coat") an der Unterlage befestigt sein. Der Grundbinder und die Schleifkörner können mit einem Deckbinder (englisch: "size coat") überdeckt sein. Optional kann oberhalb des genannten Deckbinders auch noch ein zweiter Deckbinder vorhanden sein (englisch: "supersize coat").

Als Grundbinder, Deckbinder und zweiter Deckbinder können sämtliche an sich bekannte Bindemittel eingesetzt werden, beispielsweise aus Kunstharz, wie etwa einem Phenolharz, einem Epoxid, einem Harnstoffharz, einem Melaminharz oder einem ungesättigten Polyesterharz. Der Deckbinder und/oder der zweite Deckbinders können zudem weitere übliche Wirkstoffe und/oder Füllstoffe enthalten.

Der Schleifartikel kann in unterschiedlichen Konfektionsformen vorliegen, beispielsweise als Schleifscheibe oder als Schleifband.

Eine weitere Ausführungsform umfasst auch ein Verfahren zum Herstellen eines wie oben beschriebenen Schleifartikels. Das Verfahren enthält einen Schritt, in dem eine Gesamtheit von Schleifkörnern an und/oder in einem Substrat fixiert wird, insbesondere mittels eines Bindemittels. Bei dem Substrat kann es sich etwa um eine insbesondere flexible Unterlage eines beschichteten Schleifartikels, um ein Vliesmaterial eines Vliesschleifmittels, um eine Matrix eines gebundenen Schleifmittels oder um Borsten einer Schleifbürste handeln. Im Falle eines beschichteten Schleifartikels kann das Auftragen des Grundbinders und/oder der Schleifkörner und/oder des Deckbinders und/oder des zweiten Deckbinders mit einer an sich bekannten Methode erfolgen. Beispielsweise können die Schleifkörner elektrostatisch oder mechanisch (d. h. gravimetrisch) aufgetragen werden. Für viele Ausführungsformen wird auch beim mechanischen Streuen ein großer Anteil der Schleifkörner so auf einer Schleifmittel-Unterlage orientiert, dass die Grundfläche auf der Unterlage zu liegen kommt. Dies gilt insbesondere für Schleifkörner in der Form eines Kegels oder eines Kegelstumpfs, und zwar insbesondere dann, wenn die oben genannten bevorzugten Verhältnisse zwischen Höhe und Flächendurchmesser des Schleifkorns vorliegen. Auf eine aufwändigere elektrostatische Streuung kann also verzichtet werden.

Ferner richtet sich eine Ausführungsform auch auf ein Verfahren zum Schleifen einer Oberfläche mit einem wie oben beschriebenen Schleifartikel. Bei der Oberfläche kann es sich insbesondere um eine lackierte Oberfläche handeln. Im Falle einer lackierten Oberfläche sind Schleifkörner mit Grössen von 500 µm oder weniger besonders geeignet.

Die Aufgabe wird darüber hinaus gelöst durch ein Schleifkorn mit mindestens zwei Hauptoberflächen und mindestens einer Nebenoberfläche, welche über eine erste Kante mit einer ersten Hauptoberfläche verbunden ist und über eine zweite Kante mit einer zweiten Hauptoberfläche, die mit der ersten Hauptoberfläche keine gemeinsame Kante aufweist, verbunden ist. Dabei schließt die Nebenoberfläche im Bereich der ersten Kante einen stumpfen Winkel mit der ersten Hauptoberfläche und im Bereich der zweiten Kante einen stumpfen Winkel mit der zweiten Hauptoberfläche ein.

Insbesondere wenn die Nebenoberfläche eben ist, sind somit die beiden Hauptoberflächen nicht parallel zueinander.

Unter einer Hauptoberfläche wird ein Flächenteil der Schleifkornoberfläche verstanden, der mindestens 5%, insbesondere mindestens 10%, bevorzugt mindestens 15% der Gesamtoberfläche des Schleifkorns bildet. Insbesondere haben die Hauptoberflächen zusammen einen Anteil von mindestens 60%, bevorzugt 70% an der Gesamtoberfläche des Schleifkorns.

Bevorzugt sind die Hauptoberflächen ähnlich, weiter bevorzugt kongruent, zueinander.

Analog wird unter einer Nebenoberfläche ein Flächenteil verstanden, der deutlich kleiner als die Hauptoberflächen ist und maximal 10%, bevorzugt maximal 5%, der Gesamtoberfläche des Schleifkorns bildet.

In einer bevorzugten Ausführungsform beträgt das Verhältnis der Fläche von Nebenoberfläche zur Fläche der Hauptoberfläche von 1 bis 10, besonders bevorzugt von 2 bis 15, ganz besonders bevorzugt von 5 bis 10.

Haupt- und Nebenoberflächen sind bevorzugt im Wesentlichen eben und werden in der Regel von mehr als einer Kante begrenzt.

Die Nebenoberfläche schließt jeweils bevorzugt entlang mindestens 80% einer Kante, insbesondere entlang einer gesamten Kante, einen stumpfen Winkel mit der ersten und zweiten Hauptoberfläche ein.

Die Kanten des Schleifkorns sind bevorzugt im Wesentlichen geradlinig.

Die Kanten des Schleifkorns sind vorzugsweise im Wesentlichen gleich lang. Alternativ kann das Schleifkorn eine gedrungene bzw. gestauchte Form aufweisen, indem die Kanten unterschiedliche Länge aufweisen. Insbesondere sind in einer bevorzugten Ausführungsform drei erste Kanten im Wesentlichen gleich lang und drei zweite Kanten ebenfalls gleich lang, aber kürzer als die drei ersten Kanten. Dabei weisen die drei ersten Kanten eine erste Länge L1 und die drei zweiten Kanten eine zweite Länge L2 auf. Vorzugsweise beträgt das Verhältnis von zweiter Länge L2 und erster Länge L1 von 0,7 bis 0,98, besonders bevorzugt von 0,8 bis 0,95, ganz besonders bevorzugt von 0,85 bis 0,90. Hierdurch ergibt sich eine vorteilhafte bimodale Verteilung der Schleifkörner auf dem Schleifartikel. Je nachdem, wie ein derartiges Schleifkorn auf der Unterlage des Schleifartikels zu liegen kommt, ergeben sich zwei unterschiedliche Höhen des Schleifkorns auf der Unterlage.

Ein Schleifkorn mit einer derartigen Form hat eine Grundstruktur, die durch die Hauptoberflächen gegeben ist und sehr einfach sein kann. Dennoch weist der Schleifkornkörper durch das Vorhandensein der Nebenoberflächen weitere Kanten auf, welche die Schneidkraft erhöhen.

Die Aufgabe wird weiterhin gelöst durch ein Schleifkorn mit einem Schleifkornkörper, dessen Oberfläche mindestens zwei im Wesentlichen ebene Hauptoberflächen aufweist, welche auf den Flächen eines gedachten konvexen Polyeders liegen, insbesondere eines platonischen Körpers, archimedischen Körpers, catalanischen Körpers, Prismas oder Antiprismas, auf den Flächen eines linear verzerrten platonischen Körpers, archimedischen Körpers, catalanischen Körpers, Prismas oder Antiprismas oder auf den Flächen einer gedachten Kombination der genannten Körper, wobei der Schleifkornkörper mindestens eine flächig abgestumpfte Kante aufweist. Die Hauptoberflächen werden dabei gemäß obiger Definition verstanden.

Platonische Körper sind diejenigen konvexen Polyeder, deren Seitenflächen alle zueinander kongruente (deckungsgleiche) regelmäßige Polygone sind, und von denen in jeder Ecke gleich viele zusammenstoßen. Zu den platonischen Körpern zählen der Tetraeder, der Oktaeder und der Ikosaeder, die jeweils gleichseitige Dreiecke als Seitenflächen besitzen, der Hexaeder oder Würfel, der Quadrate als Seitenflächen aufweist, und der Dodekaeder mit gleichseitigen Fünfecken als Seitenflächen.

Die archimedischen Körper sind konvexe Polyeder, deren Seitenflächen regelmäßige Vielecke sind. Die charakteristische Eigenschaft der archimedischen Körper ist, dass sich alle Ecken des Körpers zueinander völlig gleich verhalten.

Prismen, Antiprismen und die fünf platonischen Körper werden nicht zu den archimedischen Körpern gezählt.

Zu den archimedischen Körpern zählen insbesondere die platonischen Körper mit gekappten Ecken (Tetraeder-, Hexaeder-, Oktaeder-, Dodekaeder- und Ikosaederstumpf).

Ein Prisma wird begrenzt durch genau zwei kongruente n-Ecke und n Parallelogramme. Bei den n-Ecken kann es sich insbesondere um regelmäßige n-Ecke handeln. Die genannten Parallelogramme sind im Fall eines geraden Prismas Rechtecke, insbesondere Quadrate. Zu jeder natürlichen Zahl n größer gleich drei existiert ein solches Prisma. An einer Ecke treffen stets ein n-Eck und zwei Parallelogramme zusammen.

Ein Antiprisma wird begrenzt durch genau zwei kongruente n-Ecke und 2n insbesondere gleichseitige Dreiecke. Zu jeder natürlichen Zahl n größer gleich drei existiert ein solches Antiprisma. An einer Ecke treffen stets ein n-Eck und drei Dreiecke zusammen.

Die catalanischen Körper besitzen nur eine Flächenart, nämlich identische nichtregelmäßige Vielecke, haben aber mindestens zwei verschiedene Arten von Ecken.

Bei einem linear verzerrten, d.h. einem entlang mindestens einer Achse, insbesondere einer Symmetrieachse gestauchten oder gestreckten, platonischen Körper, archimedischen Körper, catalanischen Körper, Prisma oder Antiprisma sind gegenüber der unverzerrten Form nicht alle Symmetrien erhalten. Da die genannten Formen aber eine Vielzahl von Symmetrien aufweisen, besitzt der linear verzerrte entsprechende Körper immer noch eine Anzahl von Symmetrien. Ein Quader ist beispielsweise ein linear verzerrter Würfel, der zwar weniger Symmetrien als eine Würfel, aber immer noch viele Regelmäßigkeiten aufweist.

Anstelle von einer Kante des konvexen Polyeders werden die an diese Kante angrenzenden Flächen bei einer flächig abgestumpften Kante von einer Nebenoberfläche begrenzt. Die Oberfläche des Schleifkorns weist daher mindestens eine Nebenoberfläche auf, welche auf der Fläche der abgestumpften Kante liegt.

Eine flächig abgestumpfte Kante ergibt sich, indem von einem gedachten Grundkörper ein Teilstück, enthaltend eine gesamte Kante, parallel zu der Kante abgeschnitten wird. Die Schnittfläche ist bevorzugt eben, wodurch eine ebene Nebenoberfläche entsteht.

Die Schleifkornform ergibt sich also durch eine vergleichsweise einfache Grundform, die durch die Abstumpfung mindestens einer Kante weitere Kanten aufweist.

Gegenstand der vorliegenden Ausführungsform sind auch derartige Schleifkornkörper, die aus Teilkörpern zusammengesetzt sind, wobei einer der Teilkörper ein konvexer Polyeder mit mindestens einer abgestumpften Kante ist. Der andere Teilkörper kann beispielsweise eine Art Sockel bilden, der aus demselben oder einem anderen Material besteht. Bevorzugt ist der Schleifkornkörper einstückig ausgebildet. Insbesondere beim mechanischen Streuen fällt der Schleifkornkörper, z.B. aufgrund der Schwerkraft oder einer anderen äußeren Kraft bevorzugt auf den Sockel und die Kanten des konvexen Polyeders weisen von dem Untergrund weg.

In einer bevorzugten Ausführung hat ein Schleifkorn einen Körper wie vorher beschrieben, und ein Teil der Flächen, bevorzugt mindestens drei Flächen, des Schleifkorns, insbesondere Hauptoberflächen, liegen auf den Flächen einer gedachten Pyramide oder eines gedachten Pyramidenstumpfes, insbesondere auf den Flächen eines Tetraeders.

Bevorzugt sind alle Kanten des Tetraeders abgestumpft, so dass der Schleifkornkörper einerseits eine kompakte und stabile Form aufweist und gleichzeitig eine Vielzahl von Schneidkanten. Zudem ist der Schleifkornkörper symmetrisch ausgebildet, sodass es egal ist, auf welcher Hauptoberfläche er beim Streuen zum Liegen kommt.

Vorteilhafterweise ist jede Hauptoberfläche mit mindestens einer anderen Hauptoberfläche über eine Nebenoberfläche verbunden.

Da jede Fläche von Kanten begrenzt wird, ergeben sich somit eine Vielzahl von Kanten, was die Schneidkraft des Schleifkorns erhöht.

Die Form und die Größe des Schleifkorns können etwa mit Hilfe eines Mikroskops bestimmt werden. Das Schleifkorn kann eine Größe im gesamten Größenbereich aufweisen, der auch für herkömmliche Schleifkörner üblich ist.

Üblicherweise führen Schleifkörner mit größeren Größen zu einem höheren Materialabtrag von einer bearbeiteten Oberfläche als kleinere Schleifkörner. Beispielsweise kann das Schleifkorn eine Größe im Bereich von 100 µm bis 2000 µm haben. Diese Größe kann experimentell mit Hilfe eines Mikroskops bestimmt werden. Sie wird verstanden als der Durchmesser eines Hüllkreises des mikroskopierten Bildes des Schleifkorns, also als der kleinste Durchmesser eines Kreises, der das Bild umschließt.

Bei der oben beschriebenen Form des Schleifkorns handelt es sich um eine Idealisierung. Eine Ausführungsform umfasst jedoch auch Schleifkörner, welche im Rahmen der Herstellungstoleranzen von dieser idealisierten Form abweichen. Mögliche Abweichungen von der idealisierten Form können eine oder mehrere der folgenden Ursachen haben:
- Hohlräume oder Bläschen aufgrund eingeschlossener Luft und/oder anderer Gase in einer Dispersion, aus der die Schleifkörner hergestellt werden;
- fehlende Ecken und/oder Kanten, welche durch ein nicht komplettes Ausfüllen einer Gießform und/oder während eines Entfernens eines Vorprodukts des Schleifkorns aus einer Gießform entstehen;
- eingefallene Seitenflächen und/oder Kanten, die durch ein Schrumpfen während des Entfernens eines Teiles der flüchtigen Komponenten der Dispersion entstehen; insbesondere eingefallene Flächen, die aus der oberen freien, nicht in Kontakt mit der Gießform stehenden Fläche der Dispersion entstehen;
- Abplatzungen, welche durch einen Trocken- und/oder einen Sinterprozess hervorgerufen werden;
- abgebrochene Ecken und/oder Kanten, welche durch einen Transport und/oder während einer Weiterverarbeitung der Schleifkörner als Schüttgut entstehen.

Die Abweichungen von der Idealisierung müssen nicht zwangsläufig zu nachteiligen Eigenschaften des Schleifkorns führen. Beispielsweise können abgebrochene Ecke und/oder Kanten auch bewirken, dass gegenüber der Idealisierung weitere Schneidkanten entstehen, die die Schleifwirkung sogar positiv beeinflussen können.

Insbesondere umfasst eine Ausführungsform auch Schleifkörner, deren Form nur im Wesentlichen mit der idealisierten Form übereinstimmt. Beispielsweise werden auch Abschnitte der Außenkontur, insbesondere Kanten, als im Wesentlichen geradlinig angesehen, wenn sie zumindest teilweise oder sogar vollständig kurvenförmig sind und einen Krümmungsradius aufweisen, der mindestens das Doppelte, bevorzugt mindestens das Fünffache, besonders bevorzugt mindestens das Zehnfache der oben definierten Größe des Schleifkorns beträgt. Ein Punkt der Außenkontur wird im Wesentlichen als Ecke angesehen, wenn der Krümmungsradius dort höchstens 10 %, bevorzugt höchstens 5 %, besonders bevorzugt höchstens 2 % der Größe des Schleifkorns beträgt. Des Weiteren werden Hauptoberflächen und Nebenoberflächen als im Wesentlichen eben verstanden, wenn sie gewölbt sind und Krümmungsradien aufweisen, die mindestens das Doppelte, bevorzugt mindestens das Fünffache, besonders bevorzugt mindestens das Zehnfache der Größe des Schleifkorns betragen.

Bevorzugt weist das Schleifkorn aber eine wie oben beschriebene idealisierte Form auf.

Das Schleifkorn kann beispielsweise ein keramisches Material, insbesondere ein polykristallines keramisches Material, enthalten oder daraus bestehen. Bevorzugt enthält das Schleifkorn Aluminiumoxid, besonders bevorzugt α-Al₂O₃.

Alternativ oder zusätzlich kann das Schleifkorn auch noch mindestens ein weiteres Metalloxid enthalten, wie etwa Natriumoxid, Magnesiumoxid, Eisenoxid, Siliziumoxid, Kalziumoxid, Zirkonoxid, Yttriumoxid, Zinkoxid, Kobaltoxid, Nickeloxid, Hafniumoxid, Chromoxid, Praseodymoxid, Samariumoxid, Ytterbiumoxid, Neodymoxid, Lanthanoxid, Gadoliniumoxid, Ceroxid, Dysprosiumoxid, Erbiumoxid, Lutetiumoxid, Titanoxid, Manganoxid oder beliebige Kombinationen davon.

Viele dieser Metalloxide stammen von Verunreinigungen in den Ausgangsrohstoffen, wie beispielsweise in Aluminiumoxid. Bei ausreichend geringen Anteilen im Schleifkorn haben solche Verunreinigungen jedoch keinen negativen Einfluss auf die Herstellung und die Anwendung des Schleifkorns. Einige der genannten Verunreinigungen können sogar einen positiven Effekt auf das Schleifkorn haben.

Anteile von Zirkonoxid oder Yttriumoxid können beispielsweise von Mahlkugeln stammen, die in einem Mahlschritt bei der Herstellung der Schleifkörner verwendet werden können. Anteile von Eisenoxid können aus einem Mahlbehälter stammen, der bei einem solchen Mahlschritt verwendet wird.

Ebenfalls alternativ oder zusätzlich kann das Schleifkorn weitere Hartstoffe enthalten, wie beispielsweise Siliziumkarbid.

Weiterhin kann das Schleifkorn mindestens ein Zersetzungsprodukt eines unten näher beschriebenen Dispergators enthalten, der bei der Herstellung der Schleifkörner verwendet wurde. Ferner kann das Schleifkorn mindestens einen Keimbildner oder dessen Zersetzungsprodukt enthalten, welches bei der Herstellung der Schleifkörner verwendet wurde. Bei dem Keimbildner kann es sich beispielsweise um das oben bereits erwähnte Magnesiumoxid handeln.

Zudem kann das Schleifkorn auch mindestens einen der weiteren in der EP 615 816 A1 beschriebenen Stoffe enthalten.

Die genannten Inhaltsstoffe können mit Hilfe von an sich bekannten chemischen Analyseverfahren bestimmt werden.

Das Schleifkorn kann ein Gefüge mit einer oder mehreren verschiedenen Phasen enthalten oder daraus bestehen. Dabei kann eine erste Phase aus Aluminiumoxid, besonders bevorzugt aus α-Al₂O₃ bestehen. Eine zweite Phase kann aus einem oder mehreren der oben genannten weiteren Metalloxide und/oder weiteren Hartstoffe bestehen.

Der Anteil an Aluminiumoxid, insbesondere an α-Al₂O₃, im Schleifkorn kann beispielsweise mindestens 25 Gew.-%, bevorzugt mindestens 50 Gew.-%, weiter bevorzugt mindestens 70 Gew.-%, besonders bevorzugt mindestens 95 Gew.-% betragen.

Das Schleifkorn kann eine Beschichtung aufweisen, welche nur einen Teil der Oberfläche bedeckt, insbesondere nur eine oder mehrere Kanten und/oder nur einen von mehreren flächigen Bereichen der Oberfläche. Bei der Beschichtung kann es sich etwa um eine ferromagnetische oder eine paramagnetische Beschichtung handeln. Eine solche teilweise Beschichtung der Oberfläche mit einem ferromagnetischen oder einem paramagnetischen Material ermöglicht es, das Schleifkorn in einem während des Streuens angelegten Magnetfeld in einer vorgegebenen Richtung auszurichten. Alternativ kann es sich auch um eine Beschichtung aus einem Material mit einer erhöhten Wärmeleitfähigkeit handeln oder um eine Beschichtung, welche eine erhöhte Adhäsion des Schleifkorns auf der Schleifmittel-Unterlage ermöglicht.

Ein weiterer Aspekt betrifft eine Gesamtheit von Schleifkörnern. Unter einer Gesamtheit von Schleifkörnern wird hier und im Folgenden eine zusammengehörige Ansammlung von Schleifkörnern verstanden. Beispielsweise kann es sich dabei um eine Ansammlung von Schleifkörnern handeln, die in einem Gebinde enthalten und so gelagert und/oder transportiert werden, beispielsweise in einem Sack.

Eine solche Ansammlung von Schleifkörner kann zur Herstellung eines Schleifartikels verwendet werden. Als Gesamtheit von Schleifkörnern wird auch die Gesamtheit aller in einem Schleifartikel vorhandenen Schleifkörner angesehen.

Bevorzugt enthält die Gesamtheit von Schleifkörnern mindestens 20 Gew.-%, bevorzugt mindestens 50 Gew.-%, besonders bevorzugt mindestens 90 Gew.-% Schleifkörner, so wie sie oben beschrieben wurden. Die übrigen in der Gesamtheit enthalten Schleifkörner können ebenfalls eine definierte Form aufweisen, welche jedoch von Form abweicht, oder sie können keine definierte Form aufweisen, da es sich beispielsweise um gebrochene Schleifkörner handelt. Diese übrigen in der Gesamtheit enthalten Schleifkörner werden auch als "Stützkörner" bezeichnet.

Es ist denkbar, dass die in der Gesamtheit enthaltenen Schleifkörner voneinander verschieden ausgebildet sind. So kann die Gesamtheit von Schleifkörnern beispielsweise einen ersten Anteil von Schleifkörnern einer ersten Ausführungsform enthalten sowie einen zweiten Anteil von Schleifkörnern einer zweiten Ausführungsform, die von der ersten Ausführungsform verschieden ist. Insbesondere können sich die Schleifkörner der ersten Ausführungsform in ihrer Größe und/oder in ihrer Form von den Schleifkörnern der zweiten Ausführungsform unterscheiden.

Die Gesamtheit von Schleifkörnern kann ausschließlich aus identischen Schleifkörnern bestehen; insbesondere hat die Gesamtheit dann eine punktförmige Größenverteilung.

Die Gesamtheit von Schleifkörnern kann im Wesentlichen eine Größenverteilung aufweisen, die einem in der Schleifmittelindustrie üblichen Größenstandard entspricht, beispielsweise dem American National Standards Institute (ANSI), den Standards der Federation of European Producers of Abrasives (FEPA) oder dem Japanese Industrial Standard (JIS). Beispielsweise kann die Gesamtheit der Schleifkörner im Wesentlichen eine Körnung P12, P16, P20, P24, P30, P36, P40, P50, P60, P80, P100, P120, P150, P180, P220, P240, P280, P320, P360, P400, P500, P600, P800, P1000, P1200, P1500, P2000, P2500, P3000 oder P5000 gemäß dem FEPA-Standard aufweisen. Dabei bedeutet eine Größenverteilung "im Wesentlichen", dass zumindest 90 Gew.-%, bevorzugt mindestens 95 Gew.-%, weiter bevorzugt mindestens 99 Gew.-% und besonders bevorzugt sämtliche Schleifkörner der Gesamtheit von Schleifkörnern diesen Standard erfüllen.

Wie oben bereits beschrieben wurde, ist es auch denkbar, dass die Gesamtheit mindestens zwei verschiedene Anteile erfindungsgemäßer Schleifkörner und/oder mindestens einen Anteil nicht erfindungsgemäßer Schleifkörner enthält. Jeder dieser Anteile kann für sich eine Größenverteilung aufweisen, die jeweils einem der oben genannten, in der Schleifmittelindustrie üblichen Größenstandards entspricht.

Ein Schleifkorn oder eine Gesamtheit von Schleifkörnern kann beispielsweise mit dem folgenden, aus US 5,201,916 bekannten Verfahren hergestellt werden:
a. Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b. Einfüllen der Dispersion in mindestens eine Vertiefung einer Gießform;
c. optional Abrakeln einer Oberseite der Gießform, um zumindest einen Teil der Dispersion zu entfernen, der über die Oberseite der Gießform übersteht;
d. Entfernen eines Teiles der flüchtigen Komponenten der Dispersion, so dass mindestens ein Schleifkorn-Vorprodukt entsteht;
e. Entfernen des Schleifkorn-Vorprodukts aus der Gießform;
f. optional Kalzinieren des Schleifkorn-Vorprodukts;
g. Sintern des Schleifkorn-Vorprodukts, um mindestens ein Schleifkorn zu erhalten.

Vor und/oder während der Herstellung der Dispersion im Schritt a) können die Rohstoffe, insbesondere α-Aluminiumoxid-Partikel und/oder Partikel, welche in α-Aluminiumoxid umwandelbar sind, gemahlen werden. Dies kann beispielsweise mit Hilfe einer Kugelmühle erfolgen, insbesondere mit Hilfe einer Planetenkugelmühle.

Die Dispersion kann mindestens einen Dispergator enthalten. Ein solcher Dispergator erleichtert die Bildung der Dispersion und erhöht ihre Stabilität, indem er beispielsweise Schichten um die einzelnen Körner herum bildet, die das Zusammenklumpen verhindern. Bei dem Dispergator kann es sich beispielsweise um ein Polymer handeln. In der Regel zersetzt sich der Dispergator spätestens während des Sinterns im Schritt g).

Zum Herstellen der Schleifkörner kann ein Gießwerkzeug verwendet werden, wobei das Gießwerkzeug mindestens eine Gießform umfasst, die mindestens eine Vertiefung mit einer jeweiligen Oberfläche aufweist, wobei die Oberfläche komplementär zur Form zumindest eines Teils der Oberfläche des Schleifkorns ist.

Bevorzugt befindet sich eine Vielzahl von Vertiefungen in der Giessform, sodass mit einem Giessvorgang eine Vielzahl von Schleifkornkörpern gegossen werden kann.

In einer Weiterentwicklung des aus US 5,201,916 bekannten Verfahrens kann zur Herstellung einiger Ausführungsformen die oben genannte Giessform vorteilhafterweise nur ein Teil eines mehrteiligen Giesswerkzeugs sein, welches zusätzlich mindestens ein Formelement, insbesondere eine weitere Giessform oder ein Stempelelement, umfasst, mit welchem ergänzend zu der in der ersten Giessform geformten Oberfläche zumindest ein Teil der restlichen Oberfläche des Schleifkorns formbar ist. So können beispielsweise Stempelelemente vorgesehen sein, die in die gefüllten Vertiefungen der ersten Giessform geführt werden.

Bevorzugt schließen die Stempelelemente die Vertiefungen der Gießform nicht vollständig ab, so dass die flüchtige Komponente der Dispersion entweichen kann.

Kompliziertere Formen von Schleifkornkörpern sind in zusammensetzbaren Gießformen, ähnlich wie im Spritzgussverfahren, formbar. Dazu weist mindestens eine Gießform mindestens eine Einfüllöffnung auf, durch welche die Dispersion in die Vertiefungen gelangen kann.

Die Gießform und/oder das Stempelelement kann beispielsweise Silikon enthalten oder daraus bestehen. Die Vertiefungen können eine offene Deckfläche aufweisen, durch die die Dispersion eingefüllt werden kann. Die Vertiefungen der Gießform weisen jeweils eine Oberfläche auf, deren Form komplementär zur Form zumindest eines Teils der Oberfläche des gewünschten Schleifkorns ist.

Das im Schritt d) entstehende Vorprodukt sollte bevorzugt mechanisch stabil genug sein, um in den nachfolgenden Schritten als Schüttgut weiterverarbeitet werden zu können. Das optionale Kalzinieren in Schritt f) ist insbesondere dann vorteilhaft oder sogar erforderlich, wenn die Dispersion mehrere verschiedene Rohstoffe enthält und eine Phasenumwandlung erforderlich ist.

Noch ein Aspekt betrifft einen Schleifartikel, welcher eine wie oben beschriebene Gesamtheit von Schleifkörnern enthält. Insbesondere können also mindestens 20 Gew.-%, bevorzugt mindestens 50 Gew.-%, besonders bevorzugt mindestens 90 Gew.-% aller Schleifkörner des Schleifartikels als Schleifkörner ausgebildet sein, so wie sie oben beschrieben wurden. Die übrigen Schleifkörner können ebenfalls eine definierte Form aufweisen, welche jedoch von der Form abweicht, oder sie können keine definierte Form aufweisen.

Bei dem Schleifartikel kann es sich beispielsweise um einen beschichteten Schleifartikel (englisch: "coated abrasive"), einen Vliesschleifartikel, um einen gebundenen Schleifartikel (englisch: "bonded abrasive") oder um eine Schleifbürste handeln.

Ein beschichteter Schleifartikel enthält eine insbesondere flexible Unterlage, wie beispielsweise Papier, Vulkanfiber, eine Folie, ein textiles Material, einen Schaumstoff oder mehrschichtige Kombinationen davon. Die Schleifkörner können mit Hilfe eines Grundbinders (englisch: "make coat") an der Unterlage befestigt sein. Der Grundbinder und die Schleifkörner können mit einem Deckbinder (englisch: "size coat") überdeckt sein. Optional kann oberhalb des genannten Deckbinders auch noch ein zweiter Deckbinder vorhanden sein (englisch: "supersize coat").

Als Grundbinder, Deckbinder und zweiter Deckbinder können sämtliche an sich bekannte Bindemittel eingesetzt werden, beispielsweise aus Kunstharz, wie etwa einem Phenolharz, einem Epoxid, einem Harnstoffharz, einem Melaminharz oder einem ungesättigten Polyesterharz. Der Deckbinder und/oder der zweite Deckbinder können zudem weitere übliche Wirkstoffe und/oder Füllstoffe enthalten.

Der Schleifartikel kann in unterschiedlichen Konfektionsformen vorliegen, beispielsweise als Schleifscheibe oder als Schleifband.

Eine weitere Ausführungsform umfasst auch ein Verfahren zum Herstellen eines wie oben beschriebenen Schleifartikels. Das Verfahren enthält einen Schritt, in dem eine Gesamtheit von Schleifkörnern an und/oder in einem Substrat fixiert wird, insbesondere mittels eines Bindemittels. Bei dem Substrat kann es sich etwa um eine insbesondere flexible Unterlage eines beschichteten Schleifartikels, um ein Vliesmaterial eines Vliesschleifmittels, um eine Matrix eines gebundenen Schleifmittels oder um Borsten einer Schleifbürste handeln. Im Falle eines beschichteten Schleifartikels kann das Auftragen des Grundbinders und/oder der Schleifkörner und/oder des Deckbinders und/oder des zweiten Deckbinders mit einer an sich bekannten Methode erfolgen. Beispielsweise können die Schleifkörner elektrostatisch oder mechanisch (d. h. gravimetrisch) aufgetragen werden. Aufgrund der Form der Schleifkörner wird auch beim mechanischen Streuen ein großer Anteil der Schleifkörner so auf einer Schleifmittel-Unterlage orientiert, dass eine Vielzahl von Kanten von der Unterlage weg weist. Auf eine aufwändigere elektrostatische Streuung kann also verzichtet werden.

Ferner richtet sich eine Ausführungsform auch auf Verfahren zum Schleifen einer Oberfläche mit einem wie oben beschriebenen Schleifartikel. Bei der Oberfläche kann es sich insbesondere um eine lackierte Oberfläche handeln. Im Falle einer lackierten Oberfläche sind Schleifkörner mit Größen von 500 µm oder weniger besonders geeignet.

Die Aufgabe wird außerdem gelöst durch ein Schleifkorn mit definierter Form, wobei das Schleifkorn einen Körper besitzt, der einfach zusammenhängend ist und eine Oberfläche mit mindestens zwei, insbesondere mindestens fünf Flächen, vorzugsweise mindestens sieben Flächen, besitzt, wobei eine Fläche als Basisfläche ausgebildet ist. Weist die Kontur der Basisfläche mindestens einen überstumpfen Winkel auf.

In der vorliegenden Anmeldung wird unter einem einfach zusammenhängenden Körper ein Körper verstanden, bei dem jeder geschlossene Weg auf dem Körper sich auf einen Punkt zusammenziehen lässt. Der Körper weist demnach keine ihn vollständig durchdringenden Löcher auf.

Ein überstumpfer Winkel ist ein Winkel, der grösser als 180° ist.

Üblicherweise definiert der Winkel in der Basisfläche eine Ecke, an welcher Kanten zusammentreffen. Bei einem überstumpfen Winkel in der Kontur der Basisfläche gibt es in der Regel eine Kante, an welcher zwei Flächen einen überstumpfen Winkel einschließen. Während unter einem konvexen Körper ein Körper ohne "Dellen" und ohne Löcher verstanden wird, ist der Schleifkornkörper nicht konvex, sondern besitzt eine "Delle".

Die "Delle" hat zur Folge, dass an anderer Stelle, beispielsweise am Rand der "Delle", eine Ecke und/oder Kante mit einem spitzen Winkel zwischen aufeinander zulaufenden Flächen auftreten und/oder an anderer Stelle eine konvexe Wölbung mit kleineren Krümmungsradien vorliegen muss, als dies ohne die "Delle" der Fall wäre.

Diese indirekt definierten spitzen Ecken, scharfen Kante oder stark gekrümmte Flächen tragen zur verbesserten Schneidkraft eines Schleifkorns bei.

In einer vorteilhaften Lösung weist das Schleifkorn die Form eines Kegels oder eines Kegelstumpfes auf oder weist zumindest einen Teilkörper dieser Form auf. Dass das Schleifkorn einen Teilkörper enthält, ist nicht dahingehend zu verstehen, dass das Schleifkorn zwingend aus zwei oder mehr zunächst separat hergestellten Teilkörpern zusammengefügt wurde oder ist. Stattdessen sind die Schleifkörner bevorzugt einstückig ausgebildet.

Ein Kegel wird hierbei allgemein als ein geometrischer Körper verstanden, der von einer im Wesentlichen ebenen Grundfläche und im Wesentlichen geraden Mantelstrecken begrenzt wird, wobei von jedem Punkt der Außenkontur der Grundfläche jeweils eine Mantelstrecke zu einem gemeinsamen Punkt des Kegels (der Kegelspitze) verläuft (so dass alle Mantelstrecken zwischen der Kontur der Grundfläche und der Spitze des Kegels liegen), wobei die Kegelspitze außerhalb der durch die Grundfläche definierten Ebene liegt. Diese Definition ist also weder auf kreisförmige Kegel noch auf Kegel mit polygonaler Grundfläche noch auf gerade Kegel beschränkt. Die Basisfläche des Schleifkorns, insbesondere die Grundfläche des Kegels, weist mindestens einen überstumpfen Winkel auf.

Insbesondere kann es sich bei dem Kegel um eine Pyramide handeln, bei der die Grundfläche von einem Polygon gebildet wird. Eine Pyramide ist ein Polyeder, das aus mehreren aneinanderliegenden, im Wesentlichen ebenen Flächen besteht, von denen eine ein, im vorliegenden Fall konkaves, Polygon und alle anderen Dreiecke sind. Die Dreiecke (Seitenflächen) bilden die Mantelfläche.

Die Form eines Kegelstumpfs im Sinne der vorliegenden Ausführungsform entsteht dadurch, dass man von der Form eines Kegels einen kleineren Kegel abschneidet. Insbesondere kann von einem Kegel parallel zur Grundfläche ein kleinerer, zum ursprünglichen Kegel ähnlicher Kegel abgeschnitten werden. Auch diese Definition ist ebenso wenig auf polygonale Grundflächen beschränkt. Ist die Grundfläche ein Polygon, so ist der Kegelstumpf ein Pyramidenstumpf. Im Rahmen der vorliegenden Ausführungsform sollen auch derartige Körper eingeschlossen sein, die durch einen nicht zur Grundfläche parallelen Schnitt entstehen. Der Pyramidenstumpf besteht demnach aus einer Grundfläche, mehreren aneinander liegenden Vierecken und einer ebenfalls polygonalen Deckfläche.

Außerdem sind im Rahmen der vorliegenden Ausführungsform Schleifkörner mit einem Körper eingeschlossen, der von mehreren aneinander liegenden, im Wesentlichen ebenen Flächen begrenzt wird, von denen eine, ein konkaves Polygon, eine Basisfläche bildet, die Seitenflächen Dreiecke oder Vierecke sind, die mit der Basisfläche Basiskanten und miteinander Seitenkanten einschließen, wobei die Seitenkanten zwar aufeinander zulaufen, aber nicht unbedingt, wie bei einem herkömmlichen Kegel oder einem herkömmlichen Kegelstumpf, insbesondere einer herkömmlichen Pyramide oder einem herkömmlichen Pyramidenstumpf, in einem Punkt fluchten müssen.

Die hier beanspruchten Körper mit einer polygonalen Basisfläche und mit sich mit wachsendem Abstand von der Basisfläche verjüngenden Seitenflächen verjüngen sich insgesamt mit wachsendem Abstand zur Basisfläche. Sie weisen daher einen Schwerpunkt in der Nähe der Basisfläche auf und fallen beim mechanischen Streuen auf eine Unterlage bevorzugt auf die Basisfläche.

Die von der Unterlage wegweisenden Kanten und Ecken und damit die Schleifwirkung sind über die Wahl der konkreten Körperform definierbar. Im vorliegenden Fall garantiert die konkave Kontur der Basisfläche, dass genügend scharfe Kanten von der Unterlage weg weisen.

Insbesondere wird die konkave Basisfläche durch eine sternförmige Grundfläche des Kegels oder Kegelstumpfs, insbesondere der Pyramide oder des Pyramidenstumpfes, gebildet.

Die scharfen Kanten, die von den Spitzen des Sterns ausgehen, zeigen in verschiedene Raumrichtungen. Bei einer Vielzahl von zufällig auf eine Unterlage aufgebrachten Schleifkörnern liegt somit eine Vielzahl von scharfen Schleifkanten gleichmäßig verteilt in alle Richtungen vor. Das Schleifmittel ist somit ohne besondere Vorzugsrichtung für alle Schleifrichtungen gut benutzbar.

In einer vorteilhaften Ausführung weist das Schleifkorn oder ein Teilkörper des Schleifkorns die Form eines Zylinders, insbesondere eines Prismas, oder eines Antiprismas auf.

Unter einem Zylinder wird hier und im Folgenden ein Körper verstanden, der von zwei Basisflächen sowie von einer Mantelfläche, begrenzt wird. Die Basisflächen sind dabei bevorzugt im Wesentlichen eben und ebenfalls bevorzugt im Wesentlichen zueinander parallel. Die Mantelfläche wird durch eine Schar von im Wesentlichen zueinander parallelen Strecken gebildet. Die Form der Basisflächen ist also insbesondere nicht auf Polygone oder Kreise beschränkt.

Ist die Basisfläche ein Polygon, so hat das Schleifkorn oder sein Teilkörper die Form eines Prismas. Ein Prisma wird begrenzt durch genau zwei kongruente n-Ecke und n Parallelogramme. Bei den n-Ecken kann es sich insbesondere um regelmäßige n-Ecke handeln. Die genannten Parallelogramme sind im Fall eines geraden Prismas Rechtecke, insbesondere Quadrate. Zu jeder natürlichen Zahl n größer gleich drei existiert ein solches Prisma. An einer Ecke treffen stets ein n-Eck und zwei Parallelogramme zusammen.

Ein Antiprisma wird begrenzt durch genau zwei kongruenten n-Ecke und 2n insbesondere gleichseitige Dreiecke. Zu jeder natürlichen Zahl n größer gleich drei existiert ein solches Antiprisma. An einer Ecke treffen stets ein n-Eck und drei Dreiecke zusammen.

Auch die linear verzerrten Prismen und Antiprismen sind Gegenstand der vorliegenden Anmeldung.

Bei einem linear verzerrten, d.h. einem entlang mindestens einer Achse, insbesondere einer Symmetrieachse gestauchten oder gestreckten, Prisma oder Antiprisma sind gegenüber der unverzerrten Form nicht alle Symmetrien erhalten. Da die genannten Formen aber eine Vielzahl von Symmetrien aufweisen, besitzt der linear verzerrte entsprechende Körper immer noch eine Anzahl von Symmetrien.

Nicht erfindungsgemäß weisen die kongruenten n-Ecke, von denen eine die Basisfläche bildet, eine konkave Kontur auf. Insbesondere wird die Basisfläche durch ein sternförmiges Polygon gebildet.

Einfache geometrische Körper, wie Prismen oder Antiprismen, mit einer konkaven Polygonkontur lassen sich vergleichsweise unaufwendig reproduzierbar herstellen.

Körper dieser Art weisen zumeist eine Vielzahl von Symmetrien auf, sodass sich für den einzelnen Körper eine Anzahl gleichwertiger Ausrichtungen auf einer Unterlage ergeben. Bei einer Streuung von Schleifkörnern auf eine Unterlage weisen genügend spitze Kanten und/oder Ecken und/oder stärker gekrümmte Oberflächen in Schleifrichtung.

In einer vorteilhaften Ausführung des Schleifkorns umfasst die Kontur der Basisfläche mindestens ein, bevorzugt mindestens zwei und besonders bevorzugt genau zwei Kreissegmente, die vorzugsweise symmetrisch zu einander angeordnet sind. Insbesondere entspricht die Basisfläche dem Schnittbild eines Doppel-T-Ankers. Bevorzugt weist das Schleifkorn einen Körper auf, der gedanklich zusammengesetzt ist aus einem Prisma, dessen Basisfläche dem Schnittbild eines Doppel-T-Ankers entspricht, und einem Satteldach-förmigen Aufsatz.

Die Form und die Größe des Schleifkorns können etwa mit Hilfe eines Mikroskops bestimmt werden. Das Schleifkorn kann eine Größe im gesamten Größenbereich aufweisen, der auch für herkömmliche Schleifkörner üblich ist.

Üblicherweise führen Schleifkörner mit größeren Größen zu einem höheren Materialabträg von einer bearbeiteten Oberfläche als kleinere Schleifkörner. Beispielsweise kann das Schleifkorn eine Größe im Bereich von 100 µm bis 2000 µm haben. Diese Größe kann experimentell mit Hilfe eines Mikroskops bestimmt werden. Sie wird verstanden als der Durchmesser eines Hüllkreises des mikroskopierten Bildes des Schleifkorns, also als der kleinste Durchmesser eines Kreises, der das Bild umschließt.

Bei der oben beschriebenen Form des Schleifkorns handelt es sich um eine Idealisierung. Eine Ausführungsform umfasst jedoch auch Schleifkörner, welche im Rahmen der Herstellungstoleranzen von dieser idealisierten Form abweichen. Mögliche Abweichungen von der idealisierten Form können eine oder mehrere der folgenden Ursachen haben:
- Hohlräume oder Bläschen aufgrund eingeschlossener Luft und/oder anderer Gase in einer Dispersion, aus der die Schleifkörner hergestellt werden;
- fehlende Ecken und/oder Kanten, welche durch ein nicht komplettes Ausfüllen einer Gießform und/oder während eines Entfernens eines Vorprodukts des Schleifkorns aus einer Gießform entstehen;
- eingefallene Seitenflächen und/oder Kanten, die durch ein Schrumpfen während des Entfernens eines Teiles der flüchtigen Komponenten der Dispersion entstehen; insbesondere eingefallene Flächen, die aus der oberen freien, nicht in Kontakt mit der Gießform stehenden Fläche der Dispersion entstehen;
- Abplatzungen, welche durch einen Trocken- und/oder einen Sinterprozess hervorgerufen werden;
- abgebrochene Ecken und/oder Kanten, welche durch einen Transport und/oder während einer Weiterverarbeitung der Schleifkörner als Schüttgut entstehen.

Die Abweichungen von der Idealisierung müssen nicht zwangsläufig zu nachteiligen Eigenschaften des Schleifkorns führen. Beispielsweise können abgebrochene Ecke und/oder Kanten auch bewirken, dass gegenüber der Idealisierung weitere Schneidkanten entstehen, die die Schleifwirkung sogar positiv beeinflussen können.

Insbesondere umfasst eine Ausführungsform auch Schleifkörner, deren Form nur im Wesentlichen mit der idealisierten Form übereinstimmt. Bevorzugt weist das Schleifkorn aber eine wie oben beschriebene idealisierte Form auf.

Das Schleifkorn kann beispielsweise ein keramisches Material, insbesondere ein polykristallines keramisches Material, enthalten oder daraus bestehen. Bevorzugt enthält das Schleifkorn Aluminiumoxid, besonders bevorzugt α-Al₂O₃.

Alternativ oder zusätzlich kann das Schleifkorn auch noch mindestens ein weiteres Metalloxid enthalten, wie etwa Natriumoxid, Magnesiumoxid, Eisenoxid, Siliziumoxid, Kalziumoxid, Zirkonoxid, Yttriumoxid, Zinkoxid, Kobaltoxid, Nickeloxid, Hafniumoxid, Chromoxid, Praseodymoxid, Samariumoxid, Ytterbiumoxid, Neodymoxid, Lanthanoxid, Gadoliniumoxid, Ceroxid, Dysprosiumoxid, Erbiumoxid, Lutetiumoxid, Titanoxid, Manganoxid oder beliebige Kombinationen davon.

Viele dieser Metalloxide stammen von Verunreinigungen in den Ausgangsrohstoffen, wie beispielsweise in Aluminiumoxid. Bei ausreichend geringen Anteilen im Schleifkorn haben solche Verunreinigungen jedoch keinen negativen Einfluss auf die Herstellung und die Anwendung des Schleifkorns. Einige der genannten Verunreinigungen können sogar einen positiven Effekt auf das Schleifkorn haben.

Anteile von Zirkonoxid oder Yttriumoxid können beispielsweise von Mahlkugeln stammen, die in einem Mahlschritt bei der Herstellung der Schleifkörner verwendet werden können. Anteile von Eisenoxid können aus einem Mahlbehälter stammen, der bei einem solchen Mahlschritt verwendet wird.

Ebenfalls alternativ oder zusätzlich kann das Schleifkorn weitere Hartstoffe enthalten, wie beispielsweise Siliziumkarbid.

Weiterhin kann das Schleifkorn mindestens ein Zersetzungsprodukt eines unten näher beschriebenen Dispergators enthalten, der bei der Herstellung der Schleifkörner verwendet wurde. Ferner kann das Schleifkorn mindestens einen Keimbildner oder dessen Zersetzungsprodukt enthalten, welches bei der Herstellung der Schleifkörner verwendet wurde. Bei dem Keimbildner kann es sich beispielsweise um das oben bereits erwähnte Magnesiumoxid handeln.

Zudem kann das Schleifkorn auch mindestens einen der weiteren in der EP 615 816 A1 beschriebenen Stoffe enthalten.

Die genannten Inhaltsstoffe können mit Hilfe von an sich bekannten chemischen Analyseverfahren bestimmt werden.

Das Schleifkorn kann ein Gefüge mit einer oder mehreren verschiedenen Phasen enthalten oder daraus bestehen. Dabei kann eine erste Phase aus Aluminiumoxid, besonders bevorzugt aus α-Al₂O₃ bestehen. Eine zweite Phase kann aus einem oder mehreren der oben genannten weiteren Metalloxide und/oder weiteren Hartstoffe bestehen.

Der Anteil an Aluminiumoxid, insbesondere an α-Al₂O₃, im Schleifkorn kann beispielsweise mindestens 25 Gew.-%, bevorzugt mindestens 50 Gew.-%, weiter bevorzugt mindestens 70 Gew.-%, besonders bevorzugt mindestens 95 Gew.-% betragen.

Das Schleifkorn kann eine Beschichtung aufweisen, welche nur einen Teil der Oberfläche bedeckt, insbesondere nur eine oder mehrere Kanten und/oder nur einen von mehreren flächigen Bereichen der Oberfläche. Bei der Beschichtung kann es sich etwa um eine ferromagnetische oder eine paramagnetische Beschichtung handeln.

Eine solche teilweise Beschichtung der Oberfläche mit einem ferromagnetischen oder einem paramagnetischen Material ermöglicht es, das Schleifkorn in einem während des Streuens angelegten Magnetfeld in einer vorgegebenen Richtung auszurichten. Alternativ kann es sich auch um eine Beschichtung aus einem Material mit einer erhöhten Wärmeleitfähigkeit handeln oder um eine Beschichtung, welche eine erhöhte Adhäsion des Schleifkorns auf der Schleifmittel-Unterlage ermöglicht. Insbesondere kann die Beschichtung nur auf der Basisfläche des Schleifkorns vorhanden sein.

Ein weiterer Aspekt betrifft eine Gesamtheit von Schleifkörnern. Unter einer Gesamtheit von Schleifkörnern wird hier und im Folgenden eine zusammengehörige Ansammlung von Schleifkörnern verstanden. Beispielsweise kann es sich dabei um eine Ansammlung von Schleifkörnern handeln, die in einem Gebinde enthalten und so gelagert und/oder transportiert werden, beispielsweise in einem Sack.

Eine solche Ansammlung von Schleifkörner kann zur Herstellung eines Schleifartikels verwendet werden. Als Gesamtheit von Schleifkörnern wird auch die Gesamtheit aller in einem Schleifartikel vorhandenen Schleifkörner angesehen.

Bevorzugt enthält die Gesamtheit von Schleifkörnern mindestens 20 Gew.-%, bevorzugt mindestens 50 Gew.-%, besonders bevorzugt mindestens 90 Gew.-% Schleifkörner, so wie sie oben beschrieben wurden. Die übrigen in der Gesamtheit enthalten Schleifkörner können ebenfalls eine definierte Form aufweisen, welche jedoch von der Form abweicht, oder sie können keine definierte Form aufweisen, da es sich beispielsweise um gebrochene Schleifkörner handelt. Diese übrigen in der Gesamtheit enthalten Schleifkörner werden auch als "Stützkörner" bezeichnet.

Es ist denkbar, dass die in der Gesamtheit enthaltenen Schleifkörner voneinander verschieden ausgebildet sind. So kann die Gesamtheit von Schleifkörnern beispielsweise einen ersten Anteil von Schleifkörnern einer ersten Ausführungsform enthalten sowie einen zweiten Anteil von Schleifkörnern einer zweiten Ausführungsform, die von der ersten Ausführungsform verschieden ist. Insbesondere können sich die Schleifkörner der ersten Ausführungsform in ihrer Größe und/oder in ihrer Form von den Schleifkörnern der zweiten Ausführungsform unterscheiden.

Die Gesamtheit von Schleifkörnern kann ausschließlich aus identischen Schleifkörnern bestehen; insbesondere hat die Gesamtheit dann eine punktförmige Größenverteilung.

Die Gesamtheit von Schleifkörnern kann im Wesentlichen eine Größenverteilung aufweisen, die einem in der Schleifmittelindustrie üblichen Größenstandard entspricht, beispielsweise dem American National Standards Institute (ANSI), den Standards der Federation of European Producers of Abrasives (FEPA) oder dem Japanese Industrial Standard (JIS). Beispielsweise kann die Gesamtheit der Schleifkörner im Wesentlichen eine Körnung P12, P16, P20, P24, P30, P36, P40, P50, P60, P80, P100, P120, P150, P180, P220, P240, P280, P320, P360, P400, P500, P600, P800, P1000, P1200, P1500, P2000, P2500, P3000 oder P5000 gemäß dem FEPA-Standard aufweisen. Dabei bedeutet eine Größenverteilung "im Wesentlichen", dass zumindest 90 Gew.-%, bevorzugt mindestens 95 Gew.-%, weiter bevorzugt mindestens 99 Gew.-% und besonders bevorzugt sämtliche Schleifkörner der Gesamtheit von Schleifkörnern diesen Standard erfüllen.

Wie oben bereits beschrieben wurde, ist es auch denkbar, dass die Gesamtheit mindestens zwei verschiedene Anteile erfindungsgemäßer Schleifkörner und/oder mindestens einen Anteil nicht erfindungsgemäßer Schleifkörner enthält. Jeder dieser Anteile kann für sich eine Größenverteilung aufweisen, die jeweils einem der oben genannten, in der Schleifmittelindustrie üblichen Größenstandards entspricht.

Ein Schleifkorn oder eine Gesamtheit von Schleifkörnern kann beispielsweise mit dem folgenden, aus US 5,201,916 bekannten Verfahren hergestellt werden:
a. Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b. Einfüllen der Dispersion in mindestens eine Vertiefung einer Gießform;
c. optional Abrakeln einer Oberseite der Gießform, um zumindest einen Teil der Dispersion zu entfernen, der über die Oberseite der Gießform übersteht;
d. Entfernen eines Teiles der flüchtigen Komponenten der Dispersion, so dass mindestens ein Schleifkorn-Vorprodukt entsteht;
e. Entfernen des Schleifkorn-Vorprodukts aus der Gießform;
f. optional Kalzinieren des Schleifkorn-Vorprodukts;
g. Sintern des Schleifkorn-Vorprodukts, um mindestens ein Schleifkorn zu erhalten.

Vor und/oder während der Herstellung der Dispersion im Schritt a) können die Rohstoffe, insbesondere α-Aluminiumoxid-Partikel und/oder Partikel, welche in α-Aluminiumoxid umwandelbar sind, gemahlen werden. Dies kann beispielsweise mit Hilfe einer Kugelmühle erfolgen, insbesondere mit Hilfe einer Planetenkugelmühle.

Die Dispersion kann mindestens einen Dispergator enthalten. Ein solcher Dispergator erleichtert die Bildung der Dispersion und erhöht ihre Stabilität, indem er beispielsweise Schichten um die einzelnen Körner herum bildet, die das Zusammenklumpen verhindern. Bei dem Dispergator kann es sich beispielsweise um ein Polymer handeln. In der Regel zersetzt sich der Dispergator spätestens während des Sinterns im Schritt g).

Zum Herstellen der Schleifkörner kann ein Gießwerkzeug verwendet werden, wobei das Gießwerkzeug mindestens eine Gießform umfasst, die mindestens eine Vertiefung mit einer jeweiligen Oberfläche aufweist, wobei die Oberfläche komplementär zur Form zumindest eines Teils der Oberfläche des Schleifkorns ist.

Die Gießform kann beispielsweise Silikon enthalten oder daraus bestehen. Die Vertiefungen können eine offene Deckfläche aufweisen, durch die die Dispersion eingefüllt werden kann. Die Vertiefungen der Gießform weisen jeweils eine Oberfläche auf, deren Form komplementär zur Form zumindest eines Teils der Oberfläche des gewünschten Schleifkorns ist.

Bevorzugt sind die Vertiefungen so ausgebildet, dass sie Flächen und Kanten aufweisen, die komplementär zu den von der Basisfläche des Schleifkorns wegweisenden Flächen und Kanten sind. Beim Gießen der Dispersion in die Vertiefungen die Gießform kann dann die Basisfläche an der freien Oberfläche der Gießform entstehen und muss nicht gesondert geformt werden.

Alternativ können die Ausnehmungen so ausgebildet sein, dass mindestens eine Fläche komplementär zur Basisfläche des Schleifkornkörpers ist.

Es kann dann ein Stempelelement oder eine weitere Gießform notwendig sein, um definiert die Flächen und Kanten des Schleifkornkörpers zu formen, die nicht in den Ausnehmungen der ersten Gießform geformt werden. Das Schiefkorn kann beispielsweise in einem zweiteiligen Gießwerkzeug, ähnlich wie in einem Spritzgussverfahren geformt werden. Dabei kann, falls notwendig, ein Druck auf die zu formenden Dispersion ausgeübt werden, um beispielsweise ausgefüllte Formen und ebene Flächen zu erreichen.

Das im Schritt d) entstehende Vorprodukt sollte bevorzugt mechanisch stabil genug sein, um in den nachfolgenden Schritten als Schüttgut weiterverarbeitet werden zu können. Das optionale Kalzinieren in Schritt f) ist insbesondere dann vorteilhaft oder sogar erforderlich, wenn die Dispersion mehrere verschiedene Rohstoffe enthält und eine Phasenumwandlung erforderlich ist.

Noch ein Aspekt betrifft einen Schleifartikel, welcher eine wie oben beschriebene Gesamtheit von Schleifkörnern enthält. Insbesondere können also mindestens 20 Gew.-%, bevorzugt mindestens 50 Gew.-%, besonders bevorzugt mindestens 90 Gew.-% aller Schleifkörner des Schleifartikels als Schleifkörner ausgebildet sein, so wie sie oben beschrieben wurden. Die übrigen Schleifkörner können ebenfalls eine definierte Form aufweisen, welche jedoch von der Form abweicht, oder sie können keine definierte Form aufweisen.

Bei dem Schleifartikel kann es sich beispielsweise um einen beschichteten Schleifartikel (englisch: "coated abrasive"), einen Vliesschleifartikel, um einen gebundenen Schleifartikel (englisch: "bonded abrasive") oder um eine Schleifbürste handeln.

Ein beschichteter Schleifartikel enthält eine insbesondere flexible Unterlage, wie beispielsweise Papier, Vulkanfiber, eine Folie, ein textiles Material, einen Schaumstoff oder mehrschichtige Kombinationen davon. Die Schleifkörner können mit Hilfe eines Grundbinders (englisch: "make coat") an der Unterlage befestigt sein. Der Grundbinder und die Schleifkörner können mit einem Deckbinder (englisch: "size coat") überdeckt sein. Optional kann oberhalb des genannten Deckbinders auch noch ein zweiter Deckbinder vorhanden sein (englisch: "supersize coat").

Als Grundbinder, Deckbinder und zweiter Deckbinder können sämtliche an sich bekannte Bindemittel eingesetzt werden, beispielsweise aus Kunstharz, wie etwa einem Phenolharz, einem Epoxid, einem Harnstoffharz, einem Melaminharz oder einem ungesättigten Polyesterharz. Der Deckbinder und/oder der zweite Deckbinder können zudem weitere übliche Wirkstoffe und/oder Füllstoffe enthalten.

Der Schleifartikel kann in unterschiedlichen Konfektionsformen vorliegen, beispielsweise als Schleifscheibe oder als Schleifband.

Eine Ausführungsform umfasst auch ein Verfahren zum Herstellen eines wie oben beschriebenen Schleifartikels. Das Verfahren enthält einen Schritt, in dem eine Gesamtheit von Schleifkörnern an und/oder in einem Substrat fixiert wird, insbesondere mittels eines Bindemittels. Bei dem Substrat kann es sich etwa um eine insbesondere flexible Unterlage eines beschichteten Schleifartikels, um ein Vliesmaterial eines Vliesschleifmittels, um eine Matrix eines gebundenen Schleifmittels oder um Borsten einer Schleifbürste handeln. Im Falle eines beschichteten Schleifartikels kann das Auftragen des Grundbinders und/oder der Schleifkörner und/oder des Deckbinders und/oder des zweiten Deckbinders mit einer an sich bekannten Methode erfolgen. Beispielsweise können die Schleifkörner elektrostatisch oder mechanisch (d. h. gravimetrisch) aufgetragen werden. Aufgrund der Form der Schleifkörner wird auch beim mechanischen Streuen ein großer Anteil der Schleifkörner so orientiert, dass der oben beschriebene Vorteil vorliegt. Auf eine aufwändigere elektrostatische Streuung kann also verzichtet werden.

Ferner richtet sich ein Aspekt auch auf Verfahren zum Schleifen einer Oberfläche mit einem wie oben beschriebenen Schleifartikel. Bei der Oberfläche kann es sich insbesondere um eine lackierte Oberfläche handeln. Im Falle einer lackierten Oberfläche sind Schleifkörner mit Grössen von 500 µm oder weniger besonders geeignet.

Im Folgenden wird die Erfindung mit Hilfe mehrerer Ausführungsbeispiele und Zeichnungen näher erläutert. Dabei zeigen
Figuren A1a und b: eine erste Ausführungsform eines erfindungsgemäßen Schleifkorns in zwei Ansichten;
Figuren A2a und b: eine zweite Ausführungsform eines erfindungsgemäßen Schleifkorns in zwei Ansichten;
Figur A3: eine dritte Ausführungsform eines erfindungsgemäßen Schleifkorns;
Figur A4: eine vierte Ausführungsform eines erfindungsgemäßen Schleifkorns.
Figuren B1a und b: zwei Ansichten einer weiteren Ausführungsform eines Schleifkorns in der Form einer Pyramide mit siebeneckiger Grundfläche;
Figuren B2a und b: zwei Ansichten einer weiteren Ausführungsform eines Schleifkorns in der Form eines Pyramidenstumpfs mit nicht konvexer Grundfläche.
Figur C1a: eine weitere Ausführungsform eines Schleifkorns in perspektivischer Ansicht;
Figur C1b: die Ausführungsform eines Schleifkorns in einer ersten Seitenansicht;
Figur C1c: die Ausführungsform eines Schleifkorns in einer zweiten Seitenansicht;
Figur C1d: die Ausführungsform eines Schleifkorns in Draufsicht.
Figur D1a: eine weitere Ausführungsform eines Schleifkorns in perspektivischer Ansicht;
Figur D1b: die Ausführungsform eines Schleifkorns gemäß Figur D1a in Draufsicht;
Figur D2a: eine weitere Ausführungsform eines Schleifkorns in perspektivischer Ansicht;
Figur D2b: die Ausführungsform eines Schleifkorns gemäß Figur D2a in Draufsicht auf die Basisfläche;
Figur D3a: eine weitere Ausführungsform eines Schleifkorns in perspektivischer Ansicht;
Figur D3b: die Ausführungsform eines Schleifkorns gemäß Figur D3a in Draufsicht;
Figur D3c: die Ausführungsform eines Schleifkorns gemäß Figur D3a in Seitenansicht.

Das in Figur A1a in einer perspektivischen Ansicht dargestellte Schleifkorn 110 enthält eine ebene, kreisförmige erste Fläche 120 mit einer ersten Außenkontur 121 und eine dazu parallele quadratische, also polygonale zweite Fläche 125 mit einer zweiten Außenkontur 126. Zwischen der ersten Fläche 120 und der zweiten Fläche 125 ist eine gewölbte Mantelfläche 130 gebildet. Die auf der Mantelfläche 130 gezeichneten Linien deuten den gewölbten Verlauf der Mantelfläche 130 an; sie stellen jedoch keine tatsächlichen Kanten des Schleifkorns 110 dar. Das Schleifkorn 110 verläuft vollständig zwischen den beiden Ebenen, die durch die erste Fläche 120 und die zweite Fläche 125 definiert werden.

Die erste Außenkontur 121 weist keine Ecke auf, da die Richtung der Tangenten an den Punkten der ersten Außenkontur 121 stetig verläuft. Das Fehlen von Ecken in der ersten Außenkontur 121 trägt zur sicheren Verankerung des Schleifkorns 110 in einem Grundbinder bei. Im Gegensatz zur ersten Außenkontur 121 weist die zweite Außenkontur 126 vier Ecken 127 auf. Sowohl diese Ecken 127 als auch die vier dazwischen verlaufenden Kanten 128 sorgen für eine Schleifwirkung.

Die senkrechte Projektion der zweiten Fläche 125 auf die erste Fläche 120 verläuft vollständig im Inneren der ersten Fläche 120, wie auch in Figur A1b gut zu erkennen ist. Hierdurch ist das Schleifkorn 110 besonders stabil gegenüber den beim Schleifen auftretenden Kippkräften, wenn es mit der ersten Fläche 120 auf einer hier nicht dargestellten Schleifmittel-Unterlage aufliegt.

Figur A1b zeigt eine seitliche Schnittansicht durch die in Figur A1a dargestellte Schnittebene S. Diese Schnittebene S verläuft senkrecht zur ersten Fläche 120 und zur zweiten Fläche 125 und durch die Mittelpunkte dieser beiden Flächen 120, 125.

Entlang der Richtung R, die sich von der ersten Fläche 120 senkrecht zur zweiten Fläche 125 erstreckt, verjüngt sich das Schleifkorn 110. Hierdurch kann eine besonders gute Verankerung in einem auf einer Unterlage aufgetragenen Grundbinder erzielt werden. Zudem kann das Schleifkorn 110 auch mit Hilfe einer mechanischen Streuung mit hoher Wahrscheinlichkeit mit der ersten Fläche 120 auf der Unterlage platziert werden. In dieser Orientierung weisen auch die Ecken 127 und die Kanten 128 von der Unterlage weg und können somit eine Schleifwirkung hervorrufen. Die Schnittlinie der Mantelfläche 130 mit dieser Schnittebene S verläuft geradlinig.

Eine weitere erfindungsgemäße Ausführungsform ist in den Figuren A2a und A2b dargestellt. Auch dieses Schleifkorn 210 weist eine ebene kreisförmige, erste Fläche 220 mit einer ersten Außenkontur 221 und eine dazu parallele quadratische zweite Fläche 225 mit einer zweiten Außenkontur 226 auf. Im Gegensatz zum Schleifkorn 110 gemäß den Figuren A1a und A1b ist die Schnittlinie der Mantelfläche 230 des Schleifkorns 210 mit einer Schnittebene S konvex, wie in Figur A2b zu sehen ist. Durch diese Konvexität entsteht im Bereich der ersten Fläche 220 eine Art von "Stand fuß", mit dem das Schleifkorn 210 besonders stabil in einem Grundbinder verankert werden kann.

Das in Figur A3 gezeigte Schleifkorn 310 hat eine ebene erste Fläche 320 mit einer ersten Außenkontur 321, die zwar nicht kreisförmig ist, aber ebenso keine Ecken aufweist. Die parallel dazu verlaufende gegenüberliegende zweite Fläche 325 hat die Form eines unregelmäßigen Fünfecks mit fünf Ecken 327 und fünf dazwischen verlaufenden Kanten 328. Dieses Schleifkorn 310 verjüngt sich nicht in der sich von der ersten Fläche 320 senkrecht erstreckenden Richtung R.

Schließlich hat auch das Schleifkorn 410 gemäß Figur A4 eine ebene erste Fläche 420 mit einer ersten Außenkontur 421 und eine parallel dazu verlaufende zweite Fläche 425 mit einer zweiten Außenkontur 426. Die zweite Außenkontur 426 weist vier Kanten 428, 428', 428" auf. Von diesen Kanten ist die Kante 428 geradlinig; die Kanten 428' sind konvex gekrümmt; die Kante 428" ist konkav gekrümmt. Jeweils am Berührungspunkt zweier Kanten 428, 428', 428" ist eine Ecken 427 gebildet; an diesen Punkten verläuft nämlich die Richtung der Tangenten an der zweiten Außenkontur 426 unstetig.

Die erfindungsgemäßen Schleifkörner können beispielsweise mit einem im Folgenden beschriebenen Verfahren hergestellt werden: Zunächst wird eine Dispersion aus 200 g α-Al₂O₃, 0,4 g MgO, 90 g Wasser als Dispersionsmittel und 0,5 g Dispergator hergestellt. Das MgO fungiert dabei als Keimbildner. Als Dispergator kann beispielsweise das Produkt Dolapix CE64, erhältlich von Zschimmer & Schwarz, 56108 Lahnstein, Deutschland eingesetzt werden. Die somit erhaltene Dispersion wird für 30 Minuten bei 200 Umdrehungen pro Minute in einer Planetenkugelmühle gemahlen, beispielsweise einer Planetenkugelmühle PM400, erhältlich von der Retsch GmbH, 42781 Haan, Deutschland. Anschließend wird die gemahlene Dispersion in eine Gießform aus Silikon eingefüllt, die Vertiefungen in der Form der gewünschten Schleifkörner enthält. Daraufhin wird die flüchtige Komponente, also das Wasser, aus der Dispersion entfernt. Hierdurch entsteht ein Schleifkorn-Vorprodukt, welches aus der Gießform entfernt wird. Die erste Fläche des Schleifkorns kann dann aus der oberen freien, nicht in Kontakt mit der Gießform stehenden Fläche der Dispersion entstehen. In einem abschließenden Schritt wird das Vorprodukt als Schüttgut bei 1550 °C für 5 Minuten gesintert. Der Dispergator wird beim Sintern herausgebrannt.

Ein erfindungsgemäßer Schleifartikel kann beispielsweise wie folgt hergestellt werden: Auf einer Unterlage aus Vulkanfiber mit einer Dicke von 0,8 mm wird eine Phenolharz-Dispersion als Grundbinder-Vorläufer in einer Menge von 120 g/m² aufgetragen. Anschließend werden 600 g/m² der erfindungsgemäßen Schleifkörner mittels elektrostatischer Streuung aufgetragen. Daraufhin wird der Grundbinder-Vorläufer zu einem Grundbinder gehärtet. Über dem Grundbinder und den Schleifkörnern wird eine Phenolharz-Dispersion in einer Menge von 800 g/m² als Deckbinder-Vorläufer aufgetragen, welche ebenfalls gehärtet wird.

Das in den Figuren B1a und B1b gezeigte Schleifkorn 110 ist als Pyramide mit einer ebenen Grundfläche 111 in der Form eines regulären Siebenecks ausgebildet. Es handelt sich also um einen speziellen Kegel im Sinne der hier verwendeten Definition mit einer konvexen polygonalen Grundfläche. Die Außenkontur 112 der Grundfläche 113 enthält sieben Ecken 113 und sieben Kanten 114, die jeweils zwei der Ecken 113 miteinander verbinden. Jede der Ecken 113 der Außenkontur 112 der Grundfläche 111 ist über eine jeweilige Kante 116 mit einer Spitze 115 der Pyramide verbunden, die ebenfalls eine Ecke des Schleifkorns 110 bildet. Insgesamt enthält das Schleifkorn 110 also acht Ecken 113, 115 und vierzehn Kanten 114, 116.

Das Verhältnis aus der Höhe h und dem hier nicht dargestellten Flächendurchmesser der Grundfläche 111 kann im Bereich von 0,8 bis 1,4 liegen. Wie oben erläutert wurde, ist es für eine mechanische Streuung vorteilhaft, wenn das genannte Verhältnis eher klein ist, da sich das Schleifkorn bei einer mechanischen Streuung dann bevorzugt mit seiner Grundfläche auf einer Schleifmittel-Unterlage orientiert, so dass die Spitze 115 von dieser Unterlage weg weist. Im Sinne eines vorteilhaften Spanverhaltens sind hingegen eher größere Verhältnisse zweckmäßig.

Das Schleifkorn 210 gemäß Figuren B2a und B2b ist als Pyramidenstumpf mit einer Grundfläche 211 ausgebildet. Gemäß Figur B2b weist die Grundfläche 211 insgesamt 20 Ecken 213, 213' auf, die durch 20 Kanten 214 miteinander verbunden sind. Von den 20 Ecken haben die zwölf Ecken 213 einen Innenwinkel von 90°, während die acht Ecken 213' einen Innenwinkel von 270° aufweisen. Bei der Grundfläche 211 handelt sich also um kein konvexes Polygon. Die Deckfläche 217 der Pyramide ist ähnlich zur Grundfläche 211; beide Flächen können also durch eine Kombination aus einer Verschiebung und eine zentrische Streckung ineinander überführt werden. Auch die Deckfläche 217 enthält somit 20 Ecken 218, 218' und 20 Kanten 219. Zwischen der Grundfläche 211 und der Deckfläche 217 verlaufen 20 weitere Kanten 216, die jeweils eine Ecke 213, 213' der Grundfläche 211 mit einer entsprechenden Ecke 218, 218' der Deckfläche 217 verbinden. Die hohen Anzahlen der Kanten 216, 219 und der Ecken 218, 218' sorgen für eine hohe Schneidwirkung.

Die Schleifkörner können beispielsweise mit einem im Folgenden beschriebenen Verfahren hergestellt werden: Zunächst wird eine Dispersion aus 200 g α-Al₂O₃, 0,4 g MgO, 90 g Wasser als Dispersionsmittel und 0,5 g Dispergator hergestellt. Das MgO fungiert dabei als Keimbildner. Als Dispergator kann beispielsweise das Produkt Dolapix CE64, erhältlich von Zschimmer & Schwarz, 56108 Lahnstein, Deutschland eingesetzt werden. Die somit erhaltene Dispersion wird für 30 Minuten bei 200 Umdrehungen pro Minute in einer Planetenkugelmühle gemahlen, beispielsweise einer Planetenkugelmühle PM400, erhältlich von der Retsch GmbH, 42781 Haan, Deutschland. Anschließend wird die gemahlene Dispersion in eine Gießform aus Silikon eingefüllt, die Vertiefungen in der Form der gewünschten Schleifkörner enthält. Daraufhin wird die flüchtige Komponente, also das Wasser, aus der Dispersion entfernt. Hierdurch entsteht ein Schleifkorn-Vorprodukt, welches aus der Gießform entfernt wird. In einem abschließenden Schritt wird das Vorprodukt als Schüttgut bei 1550 °C für 5 Minuten gesintert. Der Dispergator wird beim Sintern herausgebrannt.

Ein Schleifartikel kann beispielsweise wie folgt hergestellt werden: Auf einer Unterlage aus Vulkanfiber mit einer Dicke von 0,8 mm wird eine Phenolharz-Dispersion als Grundbinder-Vorläufer in einer Menge von 120 g/m² aufgetragen. Anschließend werden 600 g/m² der Schleifkörner mittels elektrostatischer Streuung aufgetragen. Daraufhin wird der Grundbinder-Vorläufer zu einem Grundbinder gehärtet. Über dem Grundbinder und den Schleifkörnern wird eine Phenolharz-Dispersion in einer Menge von 800 g/m² als Deckbinder-Vorläufer aufgetragen, welche ebenfalls gehärtet wird.

Figur C1a zeigt eine Ausführungsform eines Schleifkorns 10 in perspektivischer Ansicht. Figur C1b zeigt die erste Ausführungsform des Schleifkorns 10 in einer ersten Seitenansicht, Figur C1c in einer zweiten Seitenansicht. Figur C1d zeigt das Schleifkorn 10 in Draufsicht.

Das Schleifkorn 10 besitzt drei Hauptoberflächen 11, 11', 11" und drei Nebenoberflächen 12, 12', 12". Die Nebenoberfläche 12 ist über eine erste Kante 13 mit einer ersten Hauptoberfläche 11 verbunden und über eine zweite Kante 13' mit einer zweiten Hauptoberfläche 11', die mit der ersten Hauptoberfläche 11 keine gemeinsame Kante bildet, verbunden.

Die Nebenoberfläche 12 schließt im Bereich der ersten Kante 13 einen in den Figuren nicht explizit dargestellten stumpfen Winkel mit einer ersten Hauptoberfläche 11 ein und im Bereich der zweiten Kante 13' einen stumpfen Winkel mit einer zweiten Hauptoberfläche 11'.

Analog ist die Nebenoberfläche 12' über eine erste Kante mit der Hauptoberfläche 11' verbunden und über eine zweite Kante mit der Hauptoberfläche 11" verbunden, und die Nebenoberfläche 12" ist über eine erste Kante mit der Hauptoberfläche 11" verbunden und über eine zweite Kante mit der Hauptoberfläche 11 verbunden.

Das Schleifkorn 10 besitzt einen Schleifkornkörper 14, dessen Oberfläche 15 drei ebene Hauptoberflächen 11, 11' und 11"aufweist, welche auf den Flächen eines gedachten konvexen Polyeders liegen, hier auf einem Tetraeder, dessen ebenfalls gedachte Seitenkanten flächig abgestumpft sind.

Der Schleifkornkörper 14 ist gedanklich aus Teilkörpern zusammengesetzt, zum einen aus dem Tetraeder mit abgestumpften Kanten 15, zum anderen aus einem Sockel 16, welcher die Form eines Prismas hat, dessen Grundfläche der des Tetraeders mit den abgestumpften Kanten 15 entspricht.

Natürlich ist es auch denkbar, dass der Schleifkornkörper im Gegensatz zu den Figuren C1a bis C1d nur aus einem Tetraeder mit abgestumpften Kanten 15 besteht, jedoch keinen Sockel enthält.

Beim mechanischen Streuen auf eine Unterlage fällt das Schleifkorn 10 bevorzugt auf den Sockel 16, sodass die Kanten 13, 13' und Ecken 17 von der Unterlage weg weisen.

Die Schleifkörner können beispielsweise mit einem im Folgenden beschriebenen Verfahren hergestellt werden: Zunächst wird eine Dispersion aus 200 g α-Al₂O₃, 0,4 g MgO, 90 g Wasser als Dispersionsmittel und 0,5 g Dispergator hergestellt. Das MgO fungiert dabei als Keimbildner. Als Dispergator kann beispielsweise das Produkt Dolapix CE64, erhältlich von Zschimmer & Schwarz, 56108 Lahnstein, Deutschland eingesetzt werden. Die somit erhaltene Dispersion wird für 30 Minuten bei 200 Umdrehungen pro Minute in einer Planetenkugelmühle gemahlen, beispielsweise einer Planetenkugelmühle PM400, erhältlich von der Retsch GmbH, 42781 Haan, Deutschland. Anschließend wird die gemahlene Dispersion in eine Gießform aus Silikon eingefüllt, die Vertiefungen in der Form der gewünschten Schleifkörner enthält. Für einige Ausführungsformen des Schleifkorns kann ein wie oben beschriebenes zusätzliches Formelement verwendet werden, beispielsweise eine weitere Gießform, mit welchem ergänzend zu der in der Gießform geformten Oberfläche zumindest ein Teil der restlichen Oberfläche des Schleifkorns formbar ist. Daraufhin wird die flüchtige Komponente, also das Wasser, aus der Dispersion entfernt. Hierdurch entsteht ein Schleifkorn-Vorprodukt, welches aus der Gießform entfernt wird. In einem abschließenden Schritt wird das Vorprodukt als Schüttgut bei 1550 °C für 5 Minuten gesintert. Der Dispergator wird beim Sintern herausgebrannt.

Ein Schleifartikel kann beispielsweise wie folgt hergestellt werden: Auf einer Unterlage aus Vulkanfiber mit einer Dicke von 0,8 mm wird eine Phenolharz-Dispersion als Grundbinder-Vorläufer in einer Menge von 120 g/m² aufgetragen. Anschließend werden 600 g/m² der Schleifkörner mittels elektrostatischer Streuung aufgetragen. Daraufhin wird der Grundbinder-Vorläufer zu einem Grundbinder gehärtet. Über dem Grundbinder und den Schleifkörnern wird eine Phenolharz-Dispersion in einer Menge von 800 g/m² als Deckbinder-Vorläufer aufgetragen, welche ebenfalls gehärtet wird.

Figur D1a zeigt eine perspektivische Ansicht eines ersten Ausführungsbeispiels eine Schleifkorns 10, Figur D1b eine Draufsicht desselben Ausführungsbeispiels.

Das Schleifkorn 10 hat die Form eines Kegels im Sinne der hier verwendeten allgemeinen Definition und besitzt eine Oberfläche 11 mit zwei Flächen 12, 12', wobei eine Fläche 13 als Basisfläche 13 ausgebildet ist. Die Kontur 14 der Basisfläche 13 weist einen überstumpfen Winkel 15 auf.

Figur D2a zeigt eine perspektivische Ansicht eines zweiten Ausführungsbeispiels eine Schleifkorns 20, Figur D2b eine Draufsicht desselben Ausführungsbeispiels auf die Basisfläche 23.

Das Schleifkorn 20 besitzt eine Oberfläche 21 mit sieben Flächen, wobei eine Fläche als Basisfläche 23 ausgebildet ist. Die Kontur 24 der Basisfläche 23 weist drei überstumpfe Winkel 25 auf.

Im Gegenzug weist die Kontur 24 auch drei spitze Winkel 28 auf, die jeweils Ausgangspunkte für scharfe Schneidkanten 27 sind.

Die Grundform des Schleifkörpers 20 ist eine Pyramide 29, deren Grundfläche 30 durch ein sternförmiges Polygon 31 gebildet wird. Aufgrund der konkaven Kontur der Basisfläche 23 schließen die Flächen 22 an den Kanten 27 jedoch kleinere Winkel ein, als bei einem Tetraeder. Das führt zu einer erhöhten Schneidkraft des Schleifkorns.

Figur D3a zeigt eine perspektivische Ansicht eines dritten Ausführungsbeispiels eine Schleifkorns 130. Figur D3b zeigt eine Draufsicht und Figur D3c eine Seitenansicht desselben Ausführungsbeispiels.

Die Kontur 134 der Basisfläche 133 umfasst zwei Kreissegmente 141, die symmetrisch zueinander angeordnet sind. Die Basisfläche 133 entspricht dem Schnittbild eines Doppel-T-Ankers 142, das als Logo der Firma Robert Bosch GmbH bekannt ist.

Die Basisfläche 133 besitzt eine Kontur 134 mit vier überstumpfen Winkeln 135.

Das Schleifkorn 130 weist einen Körper auf, der gedanklich zusammengesetzt ist aus einem Zylinder 143 im Sinne der hier verwendeten allgemeinen Definition, dessen Basisfläche dem Schnittbild eines Doppel-T-Ankers 142 entspricht, und einem Satteldach-förmigen Aufsatz 144. Tatsächlich ist dieses Schleifkorn 130 natürlich ebenfalls einstückig ausgebildet und kann auch einstückig hergestellt werden - beispielsweise mit Hilfe einer Gießform mit Vertiefungen, die komplementär zu dem Schleifkorn 130 sind.

Das Schnittbild des Satteldachs, ein gleichseitiges Dreieck, ist als Logo der Firma sia Abrasives Industries AG bekannt.

Die Gestaltung des Schleifkorns 130 verbindet Funktionalität und Erkennnbarkeit.

Die Schleifkörner können beispielsweise mit einem im Folgenden beschriebenen Verfahren hergestellt werden: Zunächst wird eine Dispersion aus 200 g α-Al₂O₃, 0,4 g MgO, 90 g Wasser als Dispersionsmittel und 0,5 g Dispergator hergestellt. Das MgO fungiert dabei als Keimbildner. Als Dispergator kann beispielsweise das Produkt Dolapix CE64, erhältlich von Zschimmer & Schwarz, 56108 Lahnstein, Deutschland eingesetzt werden. Die somit erhaltene Dispersion wird für 30 Minuten bei 200 Umdrehungen pro Minute in einer Planetenkugelmühle gemahlen, beispielsweise einer Planetenkugelmühle PM400, erhältlich von der Retsch GmbH, 42781 Haan, Deutschland. Anschließend wird die gemahlene Dispersion in eine Gießform aus Silikon eingefüllt, die Vertiefungen in der Form der gewünschten Schleifkörner enthält. Daraufhin wird die flüchtige Komponente, also das Wasser, aus der Dispersion entfernt. Hierdurch entsteht ein Schleifkorn-Vorprodukt, welches aus der Gießform entfernt wird. In einem abschließenden Schritt wird das Vorprodukt als Schüttgut bei 1550 °C für 5 Minuten gesintert. Der Dispergator wird beim Sintern herausgebrannt.

Ein Schleifartikel kann beispielsweise wie folgt hergestellt werden: Auf einer Unterlage aus Vulkanfiber mit einer Dicke von 0,8 mm wird eine Phenolharz-Dispersion als Grundbinder-Vorläufer in einer Menge von 120 g/m² aufgetragen. Anschließend werden 600 g/m² der Schleifkörner mittels elektrostatischer Streuung aufgetragen. Daraufhin wird der Grundbinder-Vorläufer zu einem Grundbinder gehärtet. Über dem Grundbinder und den Schleifkörnern wird eine Phenolharz-Dispersion in einer Menge von 800 g/m² als Deckbinder-Vorläufer aufgetragen, welche ebenfalls gehärtet wird.

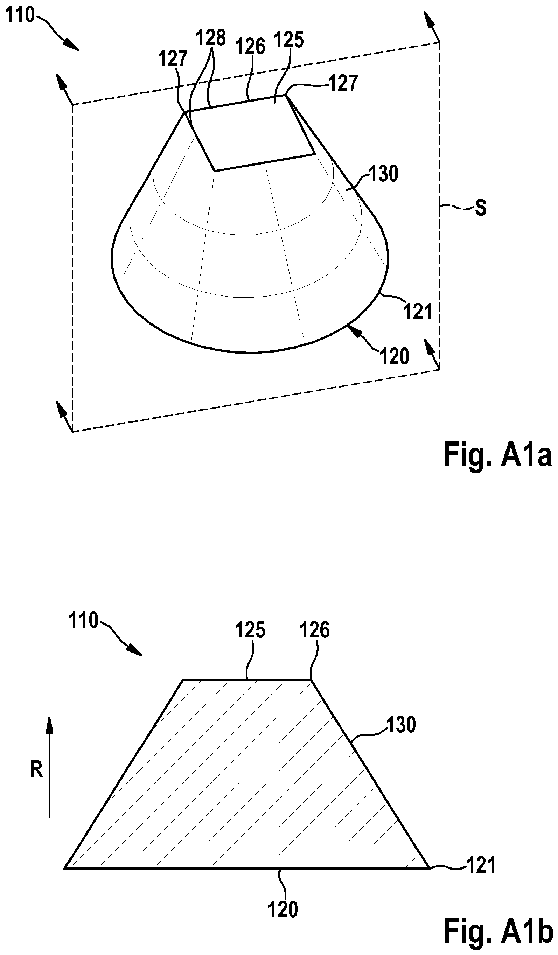

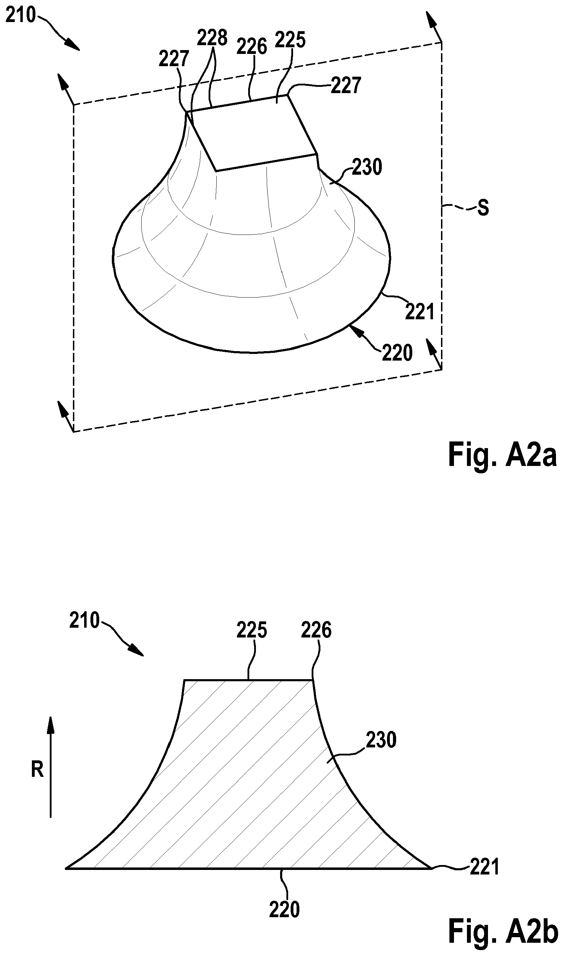

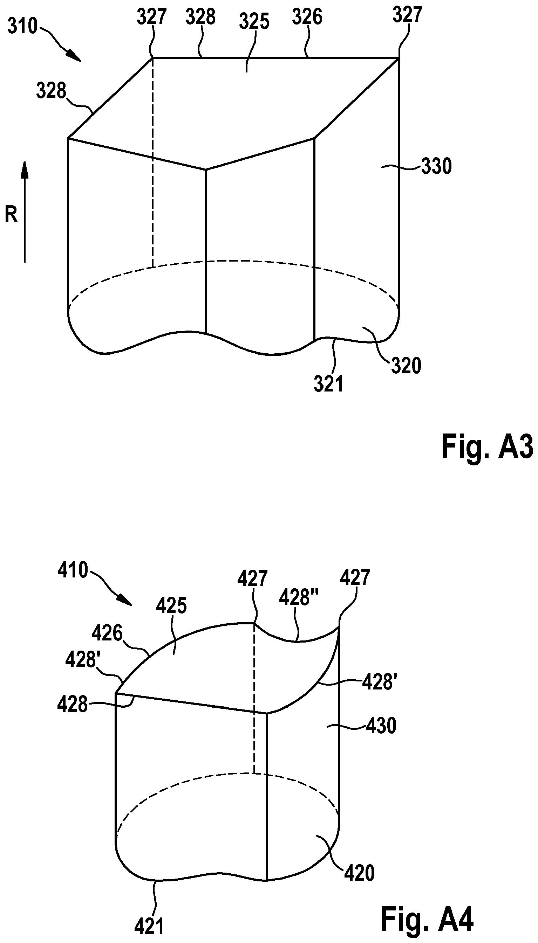

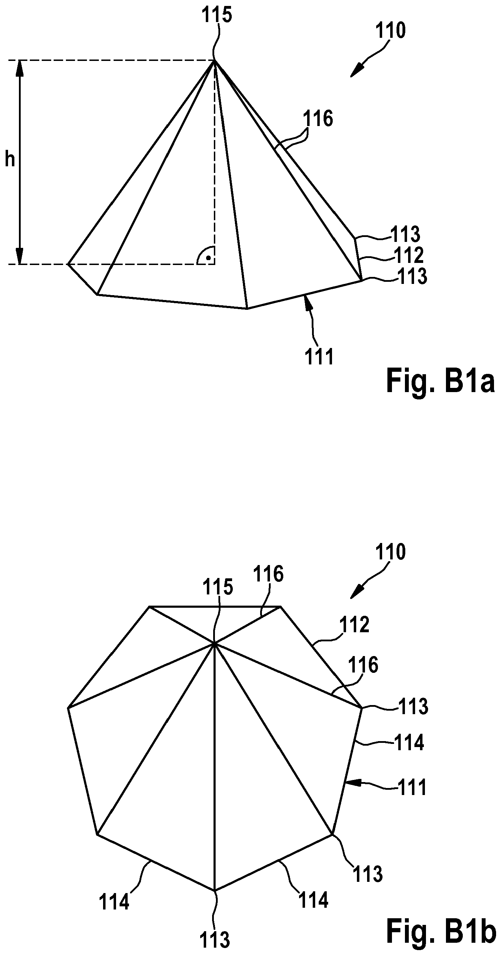

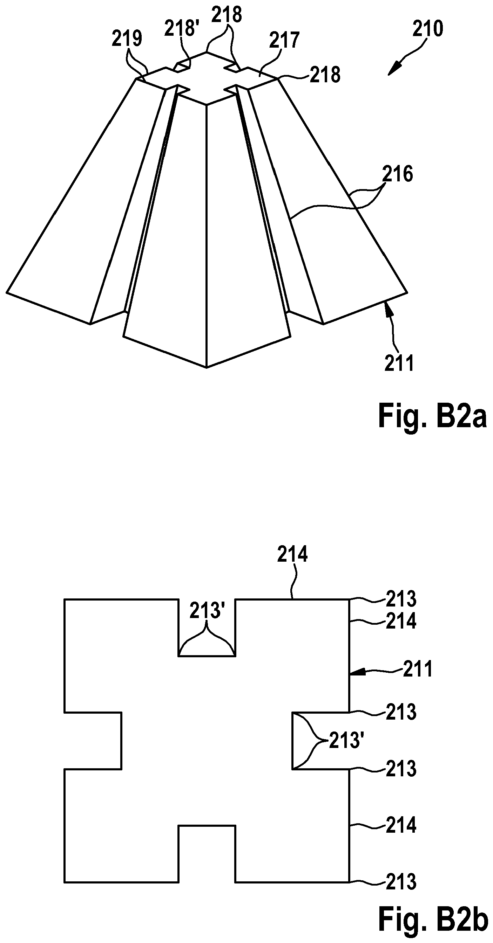

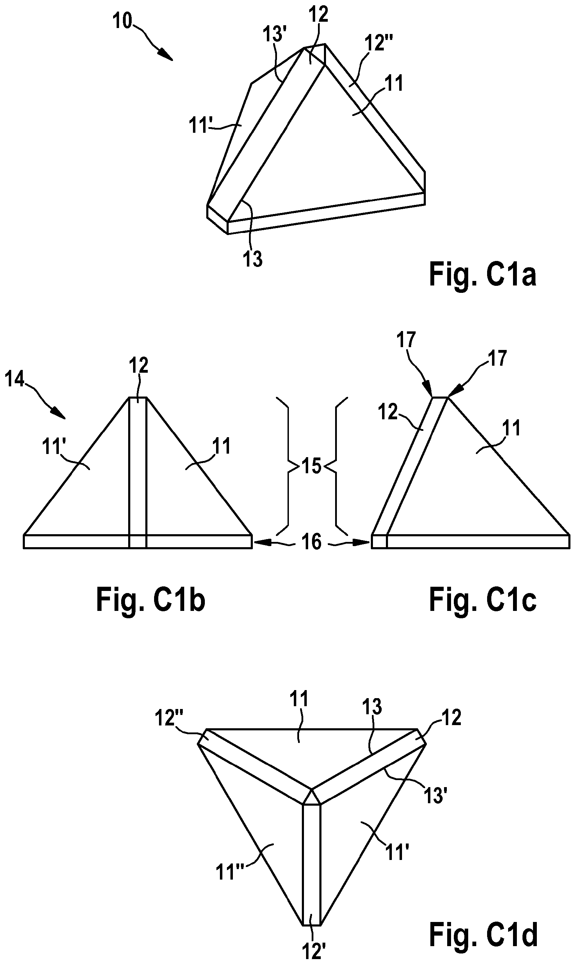

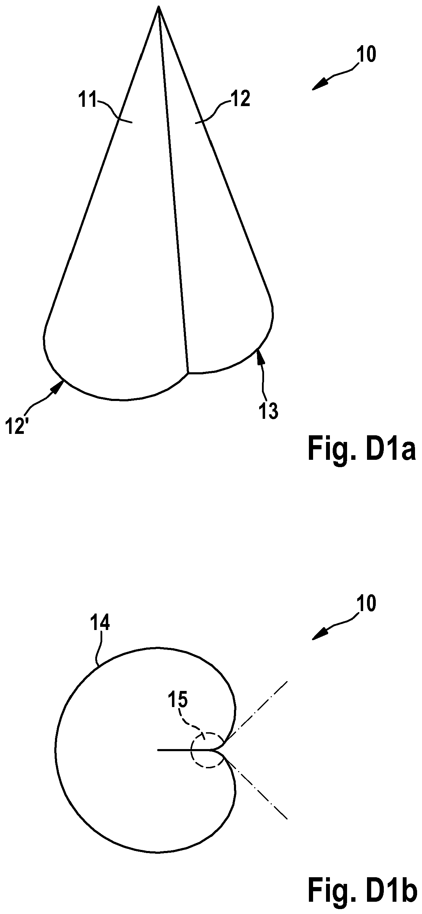

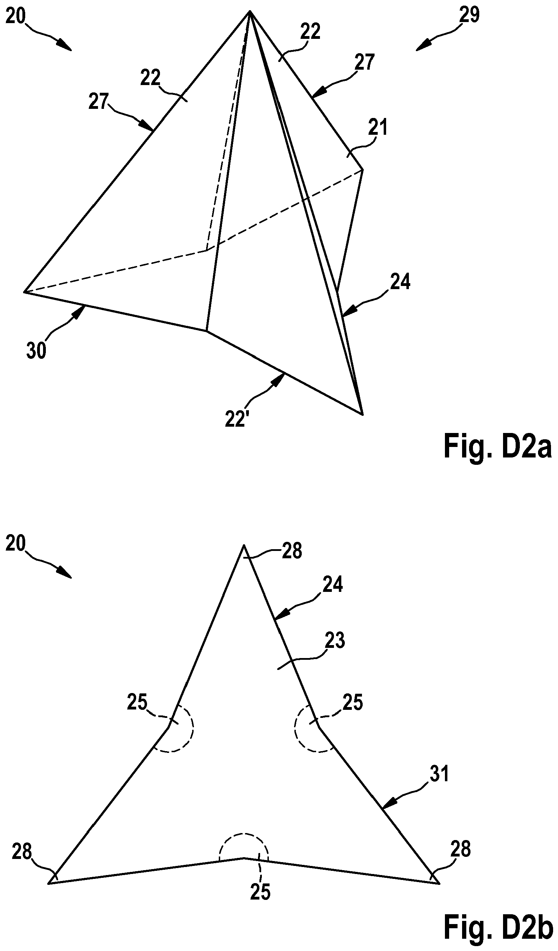

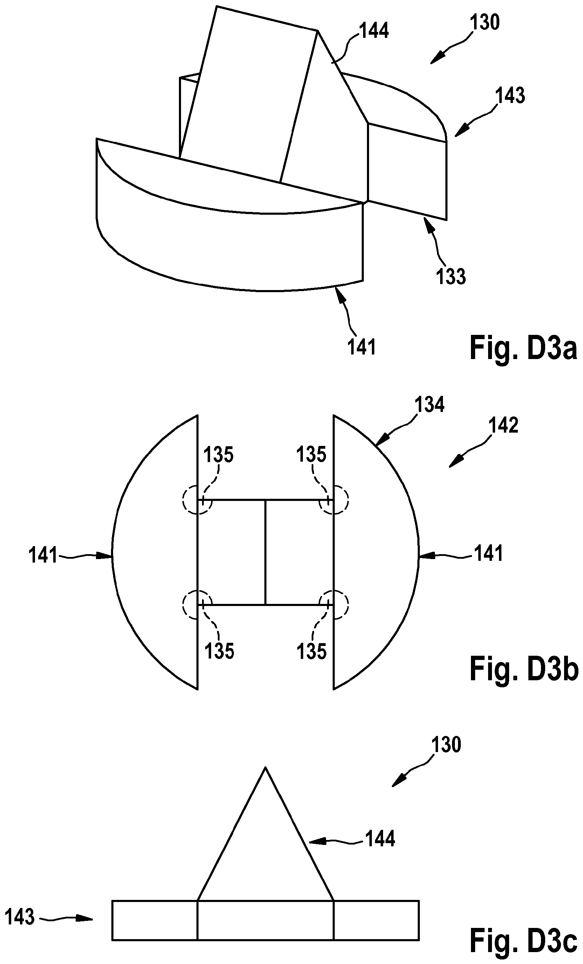

## Patentansprüche

1. Schleifkorn (110; 210; 310; 410), aufweisend eine Oberfläche mit mindestens einer ersten Fläche (120; 220; 320; 420) mit einer ersten Aussenkontur (121; 221; 321; 421) und mindestens einer zweiten Fläche (125; 225; 325; 425) mit einer zweiten Aussenkontur (126; 226; 326; 426),
**dadurch gekennzeichnet, dass**
die erste Aussenkontur (121; 221; 321; 421) keine Ecke enthält und die zweite Aussenkontur (126; 226; 326; 426) mindestens eine Ecke (127; 227; 327; 427) enthält.

2. Schleifkorn (110; 210; 310; 410) gemäss Anspruch 1, **dadurch gekennzeichnet, dass** die erste Fläche (120; 220; 320; 420) oder die zweite Fläche (125; 225; 325; 425) gewölbt ist und Krümmungsradien aufweisen, die mindestens das Doppelte, bevorzugt mindestens das Fünffache, besonders bevorzugt mindestens das Zehnfache, der Größe des Schleifkorns (110; 210; 310; 410) betragen.

3. Schleifkorn (110; 210; 310; 410) gemäss einem der vorangehenden Ansprüche, **dadurch gekennzeichnet, dass** die erste Fläche (120; 220; 320; 420) und die zweite Fläche (125; 225; 325; 425) einander gegenüberliegen und unter einem Winkel zueinander angeordnet sind, der kleiner als 30°, bevorzugt kleiner als 20°, weiter bevorzugt kleiner als 10° und besonders bevorzugt 0° ist.

4. Schleifkorn (110; 210; 310; 410) gemäss einem der vorangehenden Ansprüche, **dadurch gekennzeichnet, dass** das Schleifkorn (110; 210; 310; 410) vollständig zwischen den beiden Ebenen verläuft, die durch die erste Fläche (120; 220; 320; 420) und die zweite Fläche (125; 225; 325; 425) definiert werden.

5. Schleifkorn (110; 210; 310) gemäss einem der vorangehenden Ansprüche, **dadurch gekennzeichnet, dass** die zweite Fläche (125; 225; 325) durch ein Polygon gebildet ist.

6. Schleifkorn (110; 210) gemäss einem der vorangehenden Ansprüche,
**dadurch gekennzeichnet, dass** die senkrechte Projektion der zweiten Fläche (125; 225) auf die erste Fläche (120; 220) vollständig im Inneren der konvexen Hülle der ersten Fläche (120; 220), insbesondere im Inneren der ersten Fläche (120; 220) liegt.

7. Schleifkorn (110; 210) gemäss Anspruch 6, **dadurch gekennzeichnet, dass** sich das Schleifkorn (110; 210) entlang einer sich von der ersten Fläche (120; 220) senkrecht erstreckenden Richtung (R) verjüngt.

8. Schleifkorn (210) gemäss einem der vorangehenden Ansprüche, **dadurch gekennzeichnet, dass** zwischen der ersten Fläche (220) und der zweiten Fläche (225) eine Mantelfläche (230) gebildet ist, wobei die Schnittlinien der Mantelfläche (230) mit mindestens einer senkrecht zur ersten Fläche (220) und senkrecht zur zweiten Fläche (225) verlaufenden Schnittebene (S), insbesondere mit jeder solchen Schnittebene (S), zumindest teilweise, bevorzugt vollständig, konkav, insbesondere strikt konkav sind.

9. Schleifkorn (110; 210; 310; 410) gemäss einem der vorangehenden Ansprüche, **dadurch gekennzeichnet, dass** es ein keramisches Material, insbesondere ein polykristallines keramisches Material, enthält oder daraus besteht, bevorzugt Aluminiumoxid, besonders bevorzugt α-Al₂O₃.

10. Gesamtheit von Schleifkörnern (110; 210; 310; 410), **dadurch gekennzeichnet, dass** sie mindestens 20 Gew.-%, bevorzugt mindestens 50 Gew.-%, besonders bevorzugt mindestens 90 Gew.-% Schleifkörner (110; 210; 310; 410) nach einem der vorangehenden Ansprüche enthält.

11. Verfahren zum Herstellen mindestens eines Schleifkorns (110; 210; 310; 410) oder einer Gesamtheit von Schleifkörnern (110; 210; 310; 410) gemäss einem der vorangehenden Ansprüche, **gekennzeichnet durch** die folgenden Schritte:
a. Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b. Einfüllen der Dispersion in mindestens eine Vertiefung einer Gießform;
c. optional Abrakeln einer Oberseite der Gießform, um zumindest einen Teil der Dispersion zu entfernen, der über die Oberseite der Gießform übersteht;
d. Entfernen eines Teiles der flüchtigen Komponenten der Dispersion, so dass mindestens ein Schleifkorn-Vorprodukt entsteht;
e. Entfernen des Schleifkorn-Vorprodukts aus der Gießform;
f. optional Kalzinieren des Schleifkorn-Vorprodukts;
g. Sintern des Schleifkorn-Vorprodukts, um mindestens ein Schleifkorn (110; 210; 310; 410) zu erhalten.

12. Giesswerkzeug zum Herstellen mindestens eines Schleifkorns (110; 210; 310; 410) nach einem der Ansprüche 1 bis 9, wobei das Giesswerkzeug mindestens eine Giessform umfasst, die mindestens eine Vertiefung, bevorzugt eine Vielzahl von Vertiefungen, mit einer jeweiligen Oberfläche aufweist, wobei die Oberfläche komplementär zur Form zumindest eines Teils der Oberfläche des Schleifkorns (110; 210; 310; 410) ist.

13. Schleifartikel, enthaltend eine Gesamtheit von Schleifkörnern (110; 210; 310; 410) gemäss Anspruch 10.

14. Verfahren zum Herstellen eines Schleifartikels gemäss Anspruch 13, enthaltend einen Schritt, in dem eine Gesamtheit von Schleifkörnern (110; 210; 310; 410) gemäss Anspruch 10 an und/oder in einem Substrat fixiert wird, insbesondere mittels eines Bindemittels.

15. Verfahren zum Schleifen einer Oberfläche, insbesondere einer lackierten Oberfläche, mit einem Schleifartikel gemäss Anspruch 13.

## Claims

1. Abrasive grain (110; 210; 310; 410), having a surface with at least a first face (120; 220; 320; 420) with a first outer contour (121; 221; 321; 421) and at least a second face (125; 225; 325; 425) with a second outer contour (126; 226; 326; 426), **characterized in that** the first outer contour (121; 221; 321; 421) does not include a corner and the second outer contour (126; 226; 326; 426) includes at least one corner (127; 227; 327; 427).

2. Abrasive grain (110; 210; 310; 410) according to Claim 1, **characterized in that** the first face (120; 200; 320; 420) or the second face (125; 225; 325; 425) is curved and have radii of curvature that are at least twice, preferably at least five times, particularly preferably at least ten times, the size of the abrasive grain (110; 210; 310; 410).

3. Abrasive grain (110; 210; 310; 410) according to either of the preceding claims, **characterized in that** the first face (120; 220; 320; 420) and the second face (125; 225; 325; 425) lie opposite one another and are arranged in relation to one another at an angle that is less than 30°, preferably less than 20°, more preferably less than 10°, and is particularly preferably 0°.

4. Abrasive grain (110; 210; 310; 410) according to one of the preceding claims, **characterized in that** the abrasive grain (110; 210; 310; 410) extends completely between the two planes that are defined by the first face (120; 220; 320; 420) and the second face (125; 225; 325; 425).

5. Abrasive grain (110; 210; 310) according to one of the preceding claims, **characterized in that** the second face (125; 225; 325) is formed by a polygon.

6. Abrasive grain (110; 210) according to one of the preceding claims, **characterized in that** the perpendicular projection of the second face (125; 225) onto the first face (120; 220) lies completely within the convex envelope of the first face (120; 220), in particular within the first face (120; 220).

7. Abrasive grain (110; 210) according to Claim 6, **characterized in that** the abrasive grain (110; 210) tapers along a direction (R) running perpendicularly from the first face (120; 220).

8. Abrasive grain (210) according to one of the preceding claims, **characterized in that** between the first face (220) and the second face (225), a lateral area (230) is formed, the lines of intersection of the lateral area (230) with at least one sectional plane (S) that extends perpendicularly to the first face (220) and perpendicularly to the second face (225), in particular with each such sectional plane (S), being at least partially, preferably completely, concave, in particular strictly concave.

9. Abrasive grain (110; 210; 310; 410) according to one of the preceding claims, **characterized in that** it contains or consists of a ceramic material, in particular a polycrystalline ceramic material, preferably aluminum oxide, particularly preferably α-Al₂O₃.

10. Collective of abrasive grains (110; 210; 310; 410), **characterized in that** it includes at least 20% by weight, preferably at least 50% by weight, particularly preferably at least 90% by weight, of abrasive grains (110; 210; 310; 410) according to one of the preceding claims.

11. Method for producing at least one abrasive grain (110; 210; 310; 410) or a collective of abrasive grains (110; 210; 310; 410) according to one of the preceding claims, **characterized by** the following steps:
a. preparing or providing a dispersion, containing α-alumina particles and/or particles that can be converted into α-alumina, and also at least one volatile dispersion medium, preferably water;
b. introducing the dispersion into at least one depression in a casting mold;
c. optionally wiping an upper side of the casting mold in order to remove at least part of the dispersion that stands above the upper side of the casting mold;
d. removing part of the volatile components of the dispersion, so as to form at least one abrasive grain precursor;
e. removing the abrasive grain precursor from the casting mold;
f. optionally calcining the abrasive grain precursor;
g. sintering the abrasive grain precursor in order to obtain at least one abrasive grain (110; 210; 310; 410).

12. Casting tool for producing at least one abrasive grain (110; 210; 310; 410) according to one of Claims 1 to 9, the casting tool comprising at least one casting mold, which has at least one depression, preferably a multiplicity of depressions, with a respective surface, the surface being complementary to the form of at least part of the surface of the abrasive grain (110; 210; 310; 410).

13. Abrasive article, containing a collective of abrasive grains (110; 210; 310; 410) according to Claim 10.

14. Method for producing an abrasive article according to Claim 13, including a step in which a collective of abrasive grains (110; 210; 310; 410) according to Claim 10 is fixed on and/or in a substrate, in particular by means of a binder.

15. Method for grinding a surface, in particular a painted surface, with a grinding article according to Claim 13.

## Revendications

1. Grain de polissage (110; 210; 310; 410) présentant une surface dotée d'au moins une première face (120; 220; 320; 420) présentant un premier contour extérieur (121; 221; 321; 421) et d'au moins une deuxième face (125; 225; 325; 425) dotée d'un deuxième contour extérieur (126; 226; 326; 426),
**caractérisé en ce que**
le premier contour extérieur (121; 221; 321; 421) ne contient pas de coins et le deuxième contour extérieur (126; 226; 326; 426) contient au moins un coin (127; 227; 327; 427).

2. Grain de polissage (110; 210; 310; 410) selon la revendication 1, **caractérisé en ce que** la première face (120; 220; 320; 420) ou la deuxième face (125; 225; 325; 425) sont voûtées et présentent des rayons de courbure qui représentent au moins le double, de préférence au moins cinq fois et de façon particulièrement préférable au moins dix fois la taille du grain de polissage (110; 210; 310; 410).

3. Grain de polissage (110; 210; 310; 410) selon l'une des revendications précédentes, **caractérisé en ce que** la première face (120; 220; 320; 420) et la deuxième face (125; 225; 325; 425) sont disposées l'une en face de l'autre et à un angle mutuel inférieur à 30°, de préférence inférieur à 20°, de façon particulièrement préférable inférieur à 10° et de manière tout particulièrement préférable de 0°.

4. Grain de polissage (110; 210; 310; 410) selon l'une des revendications précédentes, **caractérisé en ce que** le grain de polissage (110; 210; 310; 410) s'étend entièrement entre les deux plans définis par la première face (120; 220; 320; 420) et la deuxième face (125; 225; 325; 425).

5. Grain de polissage (110; 210; 310) selon l'une des revendications précédentes, **caractérisé en ce que** la deuxième surface (125; 225; 325) est formée d'un polygone.

6. Grain de polissage (110; 210) selon l'une des revendications précédentes, **caractérisé en ce que** la projection verticale des la deuxième face (125; 225) sur la première face (120; 220) est située entièrement à l'intérieur de l'enveloppe convexe de la première face (120; 220) et en particulier à l'intérieur de la première face (120; 220).

7. Grain de polissage (110; 210) selon la revendication 6, **caractérisé en ce que** le grain de polissage (110; 210) se rétrécit dans une direction (R) qui s'étend perpendiculairement à la première face (120; 220).

8. Grain de polissage (210) selon l'une des revendications précédentes, **caractérisé en ce qu'**une surface d'enveloppe (230) est formée entre la première face (220) et la deuxième face (225), les lignes de coupe de la surface d'enveloppe (230) avec au moins un plan de coupe (S) qui s'étend perpendiculairement à la première face (220) perpendiculairement à la deuxième face (225), et en particulier avec chacun de ces plans de coupe (S), sont au moins en partie et de préférence complètement concaves et en particulier strictement concaves.

9. Grain de polissage (110; 210; 310; 410) selon l'une des revendications précédentes, **caractérisé en ce qu'**il contient un matériau céramique, en particulier un matériau céramique poly-cristallin ou en est constitué, et de préférence en oxyde d'aluminium et de façon particulièrement préférable en α-Al₂O₃.

10. Ensemble de grains de polissage (110; 210; 310; 410), **caractérisé en ce qu'**il contient au moins 20 % en poids, de préférence au moins 50 % en poids et de façon particulièrement préférable au moins 90 % en poids de grains de polissage (110; 210; 310; 410) selon l'une des revendications précédentes.

11. Procédé de fabrication d'au moins un grain de polissage (110; 210; 310; 410) ou d'un ensemble de grains de polissage (110; 210; 310; 410) selon l'une des revendications précédentes, **caractérisé par** les étapes suivantes :
a. fabrication ou préparation d'une dispersion qui contient des particules d'oxyde d'aluminium α et/ou des particules qui peuvent être converties en oxyde d'aluminium α ainsi qu'au moins un agent volatil de dispersion, de préférence de l'eau,
b. coulée de la dispersion dans au moins un creux dans le moule de coulée,
c. facultativement, raclage de la face supérieure du moule de coulée pour enlever au moins une partie de la dispersion qui déborde au-dessus du côté supérieur du moule de coulée,
d. enlèvement d'une partie du composant volatil de la dispersion de manière à obtenir au moins une ébauche de produit de grains de polissage,
e. enlèvement de l'ébauche de produit de grains de polissage hors du moule de coulée,
f. facultativement, calcination de l'ébauche de produit de grains de polissage,
g. frittage de l'ébauche de produit de grains de polissage pour obtenir au moins un grain de polissage (110; 210; 310; 410).

12. Outil de coulée destiné à fabriquer au moins un grain de polissage (110; 210; 310; 410) selon l'une des revendications 1 à 9, l'outil de coulée comportant au moins un moule de coulée qui présente au moins un creux et de préférence plusieurs creux qui présentent chacun une surface, la surface étant complémentaire de la forme d'au moins une partie de la surface du grain dé polissage (110; 210; 310; 410).

13. Article de polissage contenant un ensemble de grains de polissage (110; 210; 310; 410) selon la revendication 10.

14. Procédé de fabrication d'un article de polissage selon la revendication 13, contenant une étape au cours de laquelle un ensemble de grains de polissage (110; 210; 310; 410) selon la revendication 10 est fixé sur et/ou dans un support, en particulier au moyen d'un liant.

15. Procédé de polissage d'une surface, en particulier d'une surface laquée, à l'aide d'un article de polissage selon la revendication 13.
